# EUROPÄISCHE PATENTSCHRIFT

(11) **EP 2 556 004 B1**
(45) Veröffentlichungstag und Bekanntmachung des Hinweises auf die Patenterteilung: **03.12.2014**
(21) Anmeldenummer: 11718233.7
(22) Anmeldetag: 08.04.2011
(51) Int. Cl.: B65G 49/04

(54) **VORRICHTUNG ZUM BEFÖRDERN EINES ZU BEHANDELNDEN GEGENSTANDES**
DEVICE FOR CONVEYING AN OBJECT TO BE TREATED
DISPOSITIF POUR TRANSPORTER UN OBJET À TRAITER

(30) Priorität: 23.06.2010 AT 10502010; 09.04.2010 AT 5722010
(43) Veröffentlichungstag der Anmeldung: 13.02.2013
(73) Patentinhaber: Fehberger, Alex, 8724 Spielberg (AT)
(72) Erfinder: Fehberger, Alex, 8724 Spielberg (AT)
(74) Vertreter: Wirnsberger, Gernot
(86) Internationale Anmeldenummer: PCT/AT2011/000168
(87) Internationale Veröffentlichungsnummer: WO 2011/123878

(56) Entgegenhaltungen:
- EP-A1- 1 426 314

## Beschreibung

Die Erfindung betrifft eine Vorrichtung zum Befördern eines zu behandelnden Gegenstandes, insbesondere einer Karosserie, entlang einer Behandlungsstrecke nach dem Oberbegriff des Anspruchs 1.

Des Weiteren betrifft die Erfindung eine Verwendung einer derartigen Vorrichtung.

Eine oben erwähnte Behandlungsstrecke umfasst zumindest eine, meistens mehrere Stationen zur Oberflächenbehandlung eines Gegenstandes, z. B. einer Fahrzeugkarosserie. Diese Stationen können beispielsweise Tauchbäder mit verschiedenen Behandlungsflüssigkeiten sein, in welche eine Karosserie zum Reinigen, Phosphatieren oder Lackieren, insbesondere zum kathodischen Tauchlackieren, eingetaucht wird. Zwischen solchen Tauchbädern sind beispielsweise Stationen zum Absprühen sowie Zonen zum Leerlaufen und Abtropfen der Karosserien vorgesehen. Beim kathodischen oder gegebenenfalls anodischen Elektrotauchlackieren wird eine elektrische Spannung zwischen dem zu behandelnden Gegenstand und flächigen Elektroden im Behandlungsbecken angelegt. Dabei sollte der Gegenstand zur Erlangung einer gleichmäßigen Beschichtung von hoher Qualität gleichmäßigen Abstand von den flächigen Elektroden haben und nicht durch zwischen Gegenstand und flächigen Elektroden befindliche Teile einer Halterung abgeschattet werden.

Gemäß dem Stand der Technik sind verschiedene Anlagen zum Befördern von Werkstücken wie Karosserien entlang einer Behandlungsstrecke bekannt.

Im Dokument DE 10 2004 024 614 A1 ist eine Vorrichtung der eingangs genannten Art beschrieben, umfassend einen Transportwagen, eine Drehwelle und eine Halterung für ein zu behandelndes Werkstück. Beim Bewegen der Vorrichtung entlang einer Behandlungsstrecke wird ein freies Ende der Drehwelle passiv mitbewegt. Ein Einbringen des Werkstückes in ein Tauchbad erfolgt durch Drehen der Drehwelle. Die Bewegungsmöglichkeit des zu behandelnden Werkstückes ist auf eine Translation entlang der Behandlungsstrecke und eine Rotation um die Drehwelle beschränkt. Durch diese Einschränkung ergibt sich der Nachteil, dass in dem in eine Behandlungsflüssigkeit eingetauchten Werkstück eingeschlossene Luft nicht vollständig aus dem Werkstück entweichen kann, was eine vollständige Benetzung der Oberfläche des Werkstückes durch die Behandlungsflüssigkeit verhindert. Um diesen Nachteil der Vorrichtung auszugleichen, muss in Behandlungsbecken oft eine Vielzahl von Düsen eingebaut werden, welche Strömungen in der Behandlungsflüssigkeit derart erzeugen, dass die eingeschlossene Luft aus dem eingetauchten Werkstück verdrängt oder in diesem zumindest bewegt wird, sodass ein vollständiges Benetzen gegeben ist. Dies ist nicht immer in der gewünschten Weise möglich, außerdem ist bei einer geänderten Form des Werkstückes eine umständliche Neupositionierung der Düsen erforderlich. Nach dem Ausbringen des Werkstückes aus dem Tauchbad ist durch die eingeschränkte Bewegbarkeit ein vollständiges Leerlaufen bzw. Abtropfen des Werkstückes grundsätzlich nicht vollständig möglich, was zu Problemen im nächsten Behandlungsschritt führen kann.

Ein gänzlich anderer Mechanismus liegt einer Fördervorrichtung zugrunde, welche im Dokument WO 2004/069695 A2 beschrieben wird. Hier sind fast alle Bestandteile der Fördervorrichtung oberhalb eines zu behandelnden Werkstückes angeordnet, wobei eine Halterung des Werkstückes drehbar um eine Achse parallel zu einer Förder- bzw. Transportrichtung entlang einer Behandlungsstrecke gelagert ist. Das Werkstück wird durch Schwenken um diese Achse in ein Behandlungsbad eingebracht. Mittels Hin- und Herschwenken des eingetauchten Werkstückes kann ein besseres Benetzen der Oberfläche des Werkstückes durch eine Behandlungsflüssigkeit erreicht werden, jedoch ist man dabei auf ein Schwenken um eine einzige Achse beschränkt, was oft nicht ausreichend ist, um eine vollständige Benetzung zu erreichen. Des Weiteren ist bei dieser Anlage von Nachteil, dass das Einbringen des Werkstückes in das Behandlungsbad auf die genannte Weise eine wesentliche Vergrößerung des Behandlungsbeckens quer zur Transportrichtung erfordert. Eine solche Vergrößerung des Behandlungsbeckens führt zu einem unerwünschten Mehrbedarf an Behandlungsflüssigkeit und damit zu erhöhten Kosten bei Anschaffung sowie Reinigung und/oder Filtration der Behandlungsflüssigkeit. Außerdem befindet sich das Werkstück im Falle des elektrolytischen Tauchlackierens nicht symmetrisch zwischen den flächigen Elektroden an den Beckenwänden, was sich negativ auf eine Beschichtungsqualität auswirkt. Des Weiteren ist von Nachteil, dass sich die gesamte Fördertechnik der Anlage oberhalb bzw. seitlich des Werkstückes sowie in den Bereichen der Behandlungsbäder oberhalb der Behandlungsflüssigkeit befindet. Dies führt zu einer Verschmutzung der Behandlungsflüssigkeit ausgehend von den bewegten Teilen der Fördertechnik sowie zu deren Korrosion verursacht durch Behandlungsflüssigkeitsdämpfe. Des Weiteren ist dadurch das Werkstück bei Absprühvorgängen zwischen den Tauchbädern schlecht zugänglich. Bei der beschriebenen Anlage ist die Bewegung des Werkstückes eingeschränkt auf eine Translation entlang der Behandlungsstrecke und auf eine Rotation um eine Achse parallel zur Transportrichtung.

Bei einer in dem Dokument US 4,934,275 beschriebenen Anlage erfolgt ein Eintauchen bzw. Ausbringen eines Werkstückes in ein bzw. aus einem Behandlungsbad gleichzeitig mit einer Fortbewegung entlang des Behandlungsbades durch Verfahren entlang von Schienen. Dadurch werden wesentlich längere Behandlungsbecken erforderlich, was eine unerwünschte Vergrößerung der Behandlungsflüssigkeitsmenge mit sich bringt. Teile einer Halterung befinden sich unterhalb und seitlich des Werkstückes. Dadurch sind auch quer zur Transportrichtung entlang des Behandlungsbades breitere bzw. tiefere Behandlungsbecken notwendig. Außerdem führen diese Teile der Halterung zu einem vermehrten Schmutzeintrag in die Behandlungsflüssigkeit und bewirken durch Abschattung eine schlechtere Reinigungs- bzw. Beschichtungsqualität des Werkstückes. Zwischen den Behandlungsbädern ist das Werkstück durch seitlich liegende Teile der Halterung noch schlechter für Absprühvorgänge zugänglich. Wie schon bei der im vorigen Absatz beschriebenen Anlage ist auch hier die in Bereichen von Behandlungsbädern zur Gänze über der Behandlungsflüssigkeit befindliche Fördertechnik einer stärkeren Korrosion ausgesetzt und deren bewegliche Teile bewirken eine Verschmutzung der Behandlungsflüssigkeiten. Eine im Dokument US 4,934,275 beschriebene Verkippung des Werkstückes um eine Achse quer zur Transportrichtung kann nur bei gleichzeitigem Vorschub in Transportrichtung erfolgen und erfordert daher eine entsprechend größere Gesamtlänge des Behandlungsbeckens bzw. von Abtropfzonen. Das beschriebene Hin- und Herschwenken des Werkstückes um eine Achse parallel zur Transportrichtung ist durch die seitlich des Werkstückes befindliche Halterung an eine größere seitliche Ausdehnung des Behandlungsbeckens gebunden.

Die in den beiden letzten Dokumenten offenbarten Fördervorrichtungen ermöglichen zwar ein Schwenken des Werkstückes um eine Achse parallel zur Transportrichtung, was bei der im ersten Dokument offenbarten Anlage nicht der Fall ist, doch ist diese Möglichkeit in beiden Fällen konstruktionsbedingt mit einer Vielzahl von Nachteilen verbunden, die oben erläutert wurden.

Im Dokument EP 1 426 314 A1 ist eine Vorrichtung nach dem Oberbegriff des Anspruchs 1 beschrieben.

Aufgabe der Erfindung ist es, die mit den oben beschriebenen Anlagen verbundenen Nachteile zu beseitigen oder zumindest zu vermindern. Insbesondere liegt der Erfindung die Aufgabe zugrunde, eine Vorrichtung der eingangs genannten Art anzugeben, mit der bei einem in eine Behandlungsflüssigkeit eingetauchten Gegenstand eingeschlossene Luft effizient aus diesem entfernt oder zumindest Luftblasen verschoben werden können, sodass eine gute Benetzung in Behandlungsbecken möglich ist, und mit der ein bestmögliches Ablaufen bzw. Abtropfen von nach Behandlungsbädern am Gegenstand verbliebener Behandlungsflüssigkeit erfolgen kann. Dies soll von einer einfachen und platzsparenden Fördertechnik erreicht werden.

Diese Aufgabe wird erfindungsgemäß durch eine Vorrichtung mit den Merkmalen des Anspruchs 1 gelöst.

Mit der Erfindung erzielte Vorteile sind insbesondere darin zu sehen, dass die Vorrichtung drei Bewegungen des zu behandelnden Gegenstandes gleichzeitig ausführen kann: eine Translation entlang der Transportrichtung, eine Drehung um eine Achse der Drehwelle und ein Schwenken um eine Achse senkrecht zur Drehwelle. Durch Dreh- und Schwenkbewegungen beim bzw. nach dem Eintauchen des Gegenstandes in eine Behandlungsflüssigkeit ist es möglich, im Gegenstand eingeschlossene Luft effizient aus diesem zu entfernen oder zumindest Luftblasen zu verschieben und somit eine vollständige Benetzung des Gegenstandes durch die Behandlungsflüssigkeit zu gewährleisten. In den Abtropfbereichen zwischen Tauchbädern bzw. Behandlungsbecken ist durch die Dreh- und Schwenkbewegungen ein effizientes Entleeren und Abtropfen des Gegenstandes möglich, sodass eine Verschleppung von Behandlungsflüssigkeit zum nachfolgenden Becken so gering wie möglich gehalten werden kann, was wiederum Reinigungskosten für Behandlungsflüssigkeiten niedrig hält.

Weitere Vorteile ergeben sich dadurch, dass sich im eingetauchten Zustand unterhalb und seitlich des zu behandelnden Gegenstandes keine Fördertechnik befindet, sodass die Behandlungsbecken klein gehalten werden können. Außerdem ist dadurch ein optimales Reinigen und Beschichten gewährleistet, da es insbesondere beim kathodischen Tauchlackieren zu keiner Abschattung durch die Halterung kommt. Da beim Einbringen des Gegenstandes in ein Tauchbad nur sehr wenig von der Fördervorrichtung in die Behandlungsflüssigkeit eintaucht, ist der Schmutzeintrag in diese sehr gering. Insbesondere werden beim Einbringen des Gegenstandes in ein Tauchbad keine drehbar verbundenen Teile der Fördervorrichtung unter den Badspiegel eingetaucht.

Weitere Vorteile sind darin zu sehen, dass sich im Bereich von Absprühvorrichtungen zwischen den Tauchbecken keine Fördertechnik seitlich oder oberhalb des Gegenstandes befindet, sodass dieser optimal zugänglich für die Absprühvorrichtung ist. Da die beweglichen Teile der Fördertechnik zum überwiegenden Teil seitlich der Behandlungsbecken angeordnet sind, kann eine Verschmutzung der Behandlungsflüssigkeiten sowie des behandelten Gegenstandes durch Schmiermittel, Abrieb oder Ähnliches weitestgehend verhindert werden. Außerdem können diese Teile von den Behandlungsflüssigkeitsdämpfen weitestgehend abgeschirmt werden, was deren Korrosion vermindert.

Des Weiteren ist von Vorteil, dass eine gesamte Förderanlage aus mehreren unabhängigen Vorrichtungen bzw. Einzelfahrzeugen besteht und daher sehr flexibel ist. Jedes Einzelfahrzeug ist durch dessen einfache Technik sehr wartungsarm.

Es hat sich bewährt, dass bei einer erfindungsgemäßen Vorrichtung eine zumindest teilweise in der Drehwelle innenliegende Antriebswelle vorgesehen ist, wobei eine Drehung der Antriebswelle ein Schwenken der Halterung um die Achse bewirkt, welche zumindest etwa senkrecht zur Drehwelle ausgerichtet ist. Eine solche Bauweise ist platzsparend bei gleichzeitig erzieltem Schutz der innenliegenden Antriebswelle. Eine konzentrische Anordnung von Drehwelle und innenliegender Antriebswelle ermöglicht ein Antreiben beider auf konstruktiv einfache Weise.

Gemäß einer Ausführungsvariante ist es von Vorteil, wenn zumindest ein Zugmittel, insbesondere ein Riemen, das bzw. der mittelbar oder unmittelbar an der Antriebswelle und der Halterung befestigt ist, sowie optional zumindest ein Federelement zwischen Drehwelle und Halterung vorgesehen sind, wobei die Drehung der Antriebswelle ein Auf- bzw. Abrollen des zumindest einen Zugmittels bewirkt, wodurch die Halterung gegebenenfalls gegen eine Federkraft aus einer Nulllage verschwenkbar ist. Damit kann erreicht werden, dass die Schwenkachse der Halterung nahe bei dem zu behandelnden Gegenstand liegt, wodurch ein Verschwenken nur eine geringe seitliche Verschiebung des Gegenstandes verursacht, was hinsichtlich der erforderlichen seitlichen Größe eines Behandlungsbeckens von Vorteil ist.

Gemäß einer weiteren Ausführungsvariante ist es von Vorteil, wenn zur schwenkbaren Lagerung der Halterung eine Schwenkwelle vorgesehen ist, welche die Halterung trägt und welche auf der Drehwelle um die Achse, welche zumindest etwa senkrecht zur Drehwelle ausgerichtet ist, schwenkbar gelagert ist. Diese Ausführungsvariante zeichnet sich durch eine konstruktiv einfache und platzsparende Bauweise aus.

Es hat sich bewährt, dass in einem Lagerungsbereich der Schwenkwelle auf der Drehwelle ein Getriebe vorgesehen ist, sodass auf einfache Weise eine Rotation der Antriebswelle auf die Schwenkwelle übertragbar ist. Beispielsweise ist dieses Getriebe als Kegelradgetriebe zwischen Antriebswelle und Schwenkwelle ausgeführt. Es hat sich bewährt, dass das Getriebe durch O-Ring-Dichtungen gegen verspritzte Behandlungsflüssigkeit abgedichtet ist, was einen einfachen und ausreichend effizienten Schutz gegen verspritzte Flüssigkeiten darstellt.

Es ist von Vorteil, wenn ein Verriegelungsmechanismus für die Antriebswelle vorgesehen ist, welcher einen in der Drehwelle geführten Bolzen und zumindest eine an dem zumindest einen Transportwagen befestigte Stellvorrichtung für den Bolzen umfasst, wobei die zumindest eine Stellvorrichtung den Bolzen bei einer vorgegebenen Position der Drehwelle umschließt, der Bolzen sodann in verschiedene Stellungen bringbar ist und der Bolzen in einer dieser Stellungen die Antriebswelle gegen eine Rotation relativ zur Drehwelle verriegelt. Dadurch ist sichergestellt, dass ein unbeabsichtigtes Verschwenken der Halterung relativ zur Drehwelle und eine damit eventuell verbundene Beschädigung des zu behandelnden Gegenstandes verhindert wird.

Wenn alternativ das Getriebe ein Schraubgetriebe umfasst, kann das Schraubgetriebe bzw. Spindelgetriebe selbstblockierend sein, wodurch kein Sicherheits- bzw. Rückstellmechanismus für die Möglichkeit eines Motorausfalls erforderlich ist.

Diesbezüglich kann auch vorgesehen sein, dass das Schraubgetriebe eine Gewindespindel und eine Spindelmutter umfasst, wobei die Spindelmutter auf der Gewindespindel angeordnet ist und diese umschließt, sodass sich die Spindelmutter bei Drehung der Gewindespindel entlang einer Achse der Gewindespindel fortbewegt. Dabei sind mit Vorteil Zahnräder als Teil des Getriebes vorgesehen sind, welche eine Rotation der Antriebswelle auf die Gewindespindel übertragen. Insbesondere kann ein Element als Teil des Getriebes vorgesehen ist, welches mit der Schwenkwelle drehfest verbunden ist und eine Translation der Spindelmutter in eine Rotation der Schwenkwelle übersetzt.

Alternativ kann auch auf der Antriebswelle eine Spindel angeordnet sein, die in einen Lagerbock bzw. einen Mutterblock eingreift, auf dem die Halterung schwenkbar gelagert ist. Dabei kann die Halterung mit einem Verbindungselement gehalten sein, das endseitig mit Öffnungen ausgebildet ist, in welche Vorsprünge des Lagerbocks eingreifen. Bei einer derartigen Ausbildung ist vor allem von Vorteil, dass die Spindel selbstblockierend und träge ist, was kein Nachteil ist, da die Karosserie ohnedies nur langsam geschwenkt werden muss.

Zweckmäßigerweise ist im Bereich eines freien Endes der Drehwelle ein Stützelement vorgesehen, das die Drehwelle abstützt. Dadurch kann ein stabiles Befördern des zu behandelnden Gegenstandes bei gleichzeitig leichter Ausführung des Transportwagens erreicht werden. Bevorzugt ist das Stützelement eine angetriebene oder antriebslose Rolle, die auf der Drehwelle drehbar gelagert ist. Im Fall einer antriebslosen Rolle wird das freie Ende der Drehwelle dann passiv vom Transportwagen mitgeführt. Im Fall einer angetriebenen Rolle können auch schwerere Gegenstände transportiert werden. Durch eine platzsparende und leichte Ausführung des Stützelementes wird ein einfacher Rücktransport der Vorrichtung im unbeladenen Zustand ermöglicht.

Es hat sich bewährt, dass ein Rückstellmechanismus zur automatischen Rückstellung der Halterung in eine Nulllage vorgesehen ist. Dadurch ist sichergestellt, dass bei einem Ausfall eines Antriebes der Halterung diese automatisch in die Nulllage zurückkehrt, was ein Befördern des zu behandelnden Gegenstandes sicherer macht. Zweckmäßigerweise ist der Rückstellmechanismus federbelastet. Auf konstruktiv einfache Weise wird dies dadurch realisiert, dass der Rückstellmechanismus zumindest einen Rückstellstab mit jeweils zumindest einer Rückstellfeder umfasst, wobei der zumindest eine Rückstellstab mittelbar oder unmittelbar an der Drehwelle fixiert ist und die zumindest eine Rückstellfeder die Halterung in die Nulllage zurückfedert.

Des Weiteren hat es sich bewährt, dass ein Begrenzungsmechanismus zur vorbestimmten Begrenzung einer Auslenkung der Halterung aus deren Nulllage vorgesehen ist. Dadurch ist gewährleistet, dass eine Beschädigung sowohl der Vorrichtung als auch des zu behandelnden Gegenstandes durch zu weites Verschwenken vermieden wird. Auf konstruktiv besonders einfache Weise kann dies dadurch realisiert werden, dass der Begrenzungsmechanismus einen Begrenzungsstab mit zumindest einem Begrenzungselement umfasst, wobei der Begrenzungsstab mittelbar oder unmittelbar an der Drehwelle fixiert ist und das zumindest eine Begrenzungselement die Auslenkung der Halterung begrenzt.

Des Weiteren hat es sich bewährt, dass ein Mechanismus zur Bestimmung einer Position der Halterung vorgesehen ist. Damit kann erreicht werden, dass eine Schwenkposition der Halterung unabhängig von einer Stellung der Drehwelle bekannt ist. Dies ergibt eine zusätzliche Sicherheit für den zu behandelnden Gegenstand vor Beschädigung. Auf konstruktiv einfache Weise wird dies dadurch realisiert, dass der Mechanismus zur Bestimmung einer Position der Halterung eine zumindest teilweise in der Drehwelle innenliegende Übertragungsstange und eine Auslesescheibe im Bereich des Transportwagens umfasst, wobei die Übertragungsstange die Auslesescheibe bei Schwenken der Halterung entlang der Drehwelle verschiebt.

Zweckmäßigerweise sind Motoren und Übersetzung zum Antreiben der Drehwelle und der Halterung vorgesehen.

Vorteilhafterweise ist eine Stromzuführung zum zu behandelnden Gegenstand für kathodisches Tauchlackieren vorgesehen, welche einen Schleifring zwischen Transportwagen und Drehwelle, eine zumindest teilweise in der Drehwelle innenliegende elektrische Leitung sowie einen elektrischen Anschluss für den zu behandelnden Gegenstand auf der Halterung umfasst.

Eine Verwendung der erfindungsgemäßen Vorrichtung erfolgt typischerweise beim Reinigen und Tauchlackieren von Karosserien.

Bevorzugt werden dabei mehrere Vorrichtungen unabhängig voneinander und nacheinander entlang der Behandlungsstrecke bewegt.

Weitere Merkmale, Vorteile und Wirkungen der Erfindung ergeben sich anhand der nachfolgend dargestellten Ausführungsbeispiele. In den Zeichnungen, auf welche dabei Bezug genommen wird, zeigen:
Fig.1 und 2 je eine perspektivische Darstellung einer erfindungsgemäßen Vorrichtung mit Schwenkwelle;
Fig. 3 einen Aufriss einer Vorrichtung gemäß Fig. 1;
Fig. 4 eine aufgeschnittene Ansicht von Drehwelle und Getriebe einer Vorrichtung gemäß Fig. 1;
Fig. 5 und 6 aufgeschnittene Ansichten eines Getriebes einer Vorrichtung gemäß Fig. 1;
Fig. 7 eine aufgeschnittene Ansicht von Drehwelle und Getriebe einer Vorrichtung gemäß Fig. 1;
Fig. 8 und 9 jeweils eine Detailansicht eines Verriegelungsmechanismus für die Antriebswelle einer Vorrichtung gemäß Fig. 1 mit zwei unterschiedlichen Stellungen von Bolzen und Stellvorrichtung;
Fig. 10 eine perspektivische Darstellung einer Vorrichtung gemäß Fig. 1 inklusive Abdeckungen und Schutzblech;
Fig. 11 eine perspektivische Darstellung einer Vorrichtung gemäß Fig.1 mit eingezeichneten möglichen Bewegungsrichtungen eines zu behandelnden Gegenstandes;
Fig. 12 eine perspektivische Darstellung einer Behandlungsstrecke inklusive einer erfindungsgemäßen Vorrichtung mit Schwenkwelle gemäß Fig. 1 und zu behandelnder Karosserie;
Fig. 13 eine perspektivische Darstellung einer Behandlungsstrecke und einer Vorrichtung gemäß Fig. 1 beim Eintauchen der Karosserie in ein Behandlungsbad;
Fig. 14 einen Aufriss einer Behandlungsstrecke und einer Vorrichtung gemäß Fig. 1 mit in ein Behandlungsbad eingetauchter Karosserie;
Fig. 15 einen Aufriss einer Behandlungsstrecke und einer Vorrichtung gemäß Fig. 1, wobei sich die Karosserie in einer Abtropfzone befindet;
Fig. 16 eine perspektivische Darstellung einer erfindungsgemäßen Vorrichtung mit Riemen und Federelementen;
Fig. 17 einen Aufriss einer Vorrichtung gemäß Fig. 16;
Fig. 18 eine aufgeschnittene Ansicht einer Vorrichtung gemäß Fig. 16;
Fig. 19 eine aufgeschnittene Ansicht eines freien Endes einer Drehwelle einer erfindungsgemäßen Vorrichtung mit angetriebenem Stützelement;
Fig. 20 eine aufgeschnittene Detailansicht eines Fahrwerkes eines Transportwagens;
Fig. 21 und 22 aufgeschnittene Ansichten eines Getriebes einer Vorrichtung gemäß Fig. 1 in einer zweiten Ausführungsvariante;
Fig. 23 und 24 aufgeschnittene Ansichten einer Vorrichtung in einer dritten Ausführungsvariante.

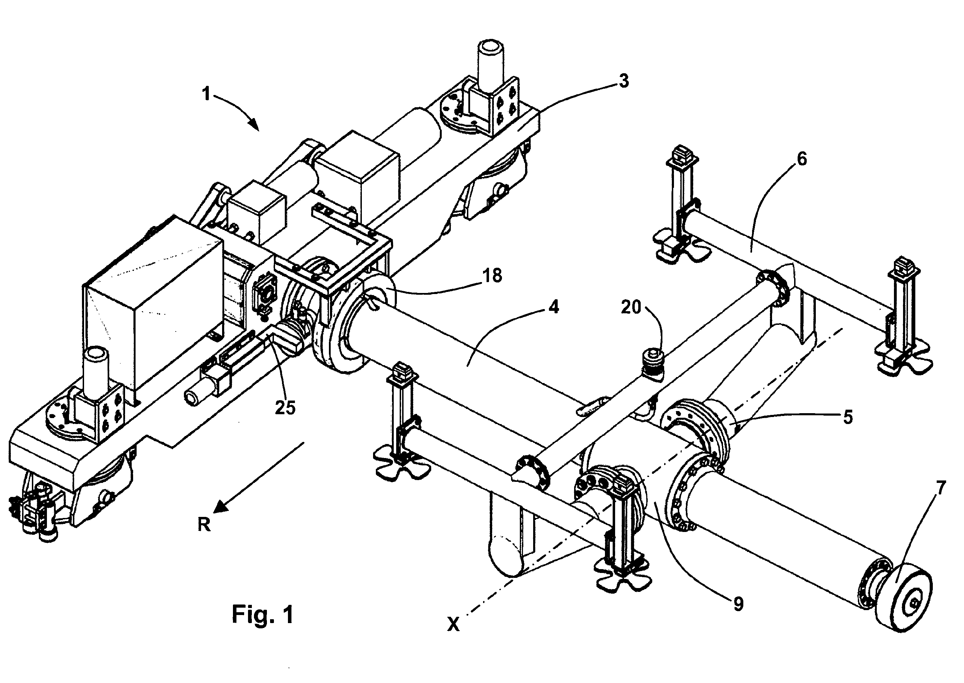

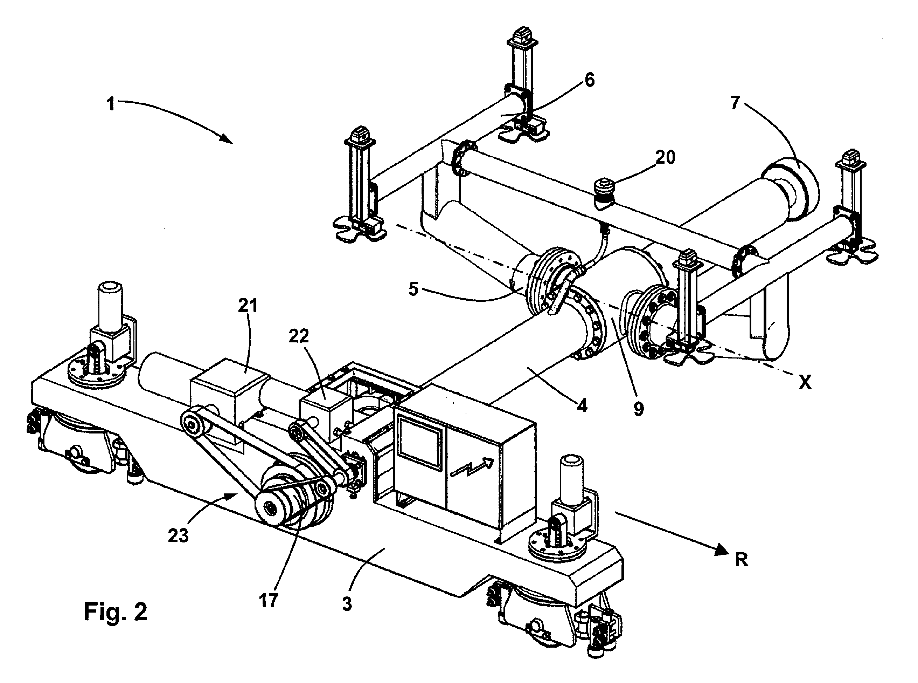

Zwei perspektivische Gesamtansichten einer bevorzugten Ausführungsform einer erfindungsgemäßen Vorrichtung 1 sind in Fig. 1 und 2 dargestellt. Die Vorrichtung 1 umfasst als Grundbestandteile einen Transportwagen 3, eine Drehwelle 4, eine Schwenkwelle 5 und eine Halterung 6. Der Transportwagen 3 ist entlang einer Transportrichtung R bewegbar. Die Drehwelle 4 ist waagrecht und in einem rechten Winkel zur Transportrichtung R ausgerichtet sowie an einem Ende am Transportwagen 3 drehbar gelagert. Die Schwenkwelle 5 ist in einem rechten Winkel zur Drehwelle 4 entlang einer Achse X ausgerichtet und auf der Drehwelle 4 in einem bestimmten Winkelbereich schwenkbar gelagert. Die Halterung 6 ist auf der Schwenkwelle 5 befestigt und dient zur Befestigung eines zu behandelnden Gegenstandes auf der Vorrichtung 1. An dem freien Ende der Drehwelle 4 ist ein Stützelement 7 in Form einer antriebslosen Rolle vorgesehen, welche das freie Ende der Drehwelle 4 abstützt und von dem Transportwagen 3 passiv mitgeführt wird. Im Lagerungsbereich der Schwenkwelle 5 auf der Drehwelle 4 ist ein Getriebe 9 vorgesehen, welches zur Übertragung einer Drehbewegung auf die Schwenkwelle 5 dient. Wie in Fig. 2 ersichtlich, sind auf dem Transportwagen 3 zwei Motoren 21 bzw. 22 sowie Übersetzungen 23 vorgesehen, durch welche Drehwelle 4 bzw. Schwenkwelle 5 angetrieben werden. Oberhalb von Rädern des Transportwagens 3 sind weitere Motoren vorgesehen, durch welche der Transportwagen 3 in Transportrichtung R angetrieben werden kann. Eine Stromversorgung des Transportwagens 3 kann beispielsweise über Stromschienen erfolgen.

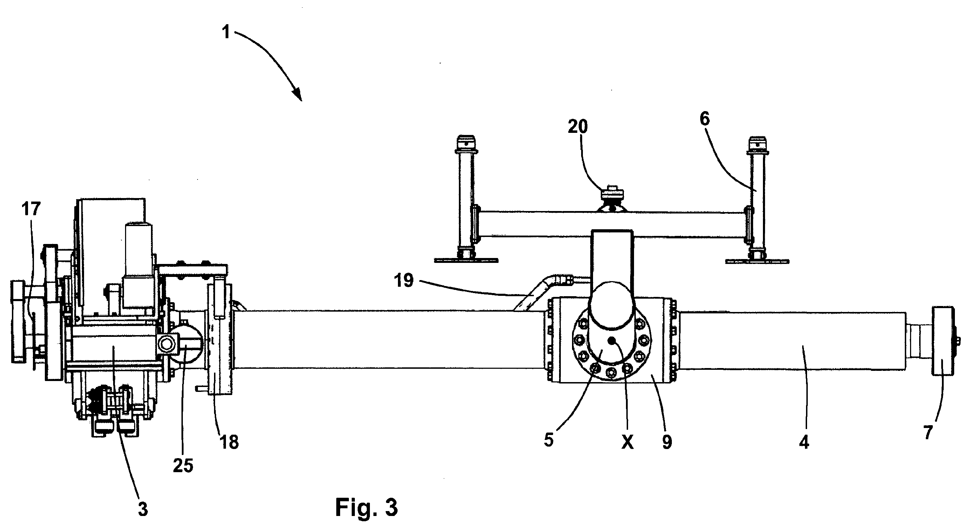

In Fig. 3 ist ein Aufriss dieser Ausführungsform der Vorrichtung 1 dargestellt. Die Transportrichtung R des Transportwagens 3 und die Achse X der Schwenkung der Halterung 6 und der Schwenkwelle 5 stehen senkrecht zur Bildebene. Zur elektrischen Kontaktierung eines zu behandelnden Gegenstandes für kathodisches Tauchlackieren ist auf der Halterung 6 ein elektrischer Anschluss 20 vorgesehen, welcher mit einem Schleifring 18 im Bereich der drehbaren Lagerung der Drehwelle 4 auf dem Transportwagen 3 über eine elektrische Leitung 19 verbunden ist.

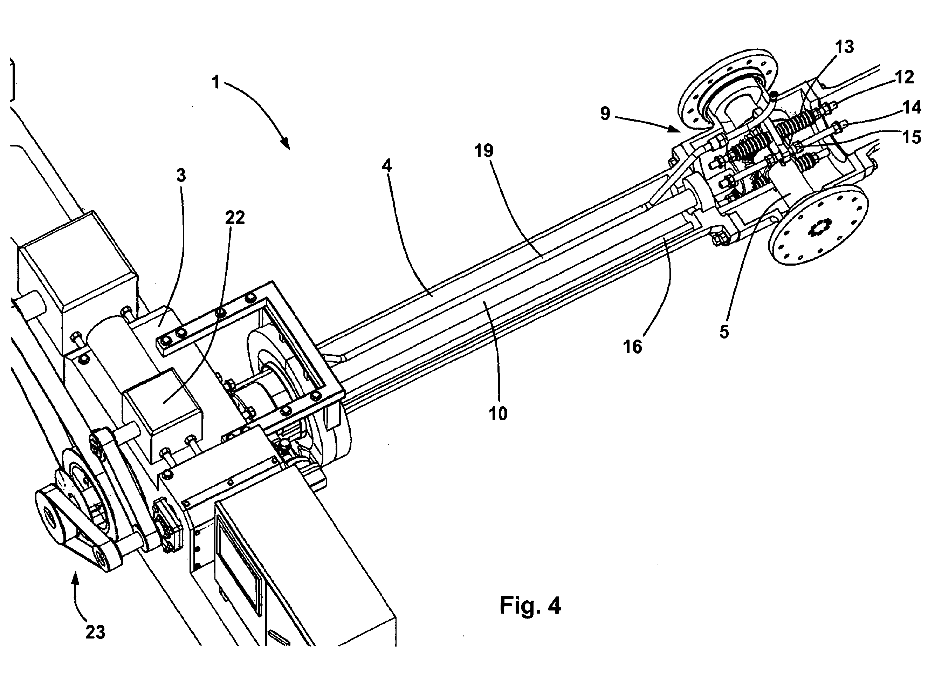

In Fig. 4 ist eine aufgeschnittene Darstellung der Vorrichtung 1 im Bereich der Drehwelle 4 und des Getriebes 9 dargestellt. In der Drehwelle 4 innenliegend ist eine Antriebswelle 10 vorgesehen, welche in der Drehwelle 4 drehbar gelagert ist und von dem auf dem Transportwagen 3 befindlichen Motor 22 über Übersetzungen 23 angetrieben wird. Das Getriebe 9 ist als Kegelradgetriebe zwischen Antriebswelle 10 und Schwenkwelle 5 ausgeführt. Somit kann eine Rotation der Antriebswelle 10 auf die Schwenkwelle 5 sowie auf die mit dieser verbundene Halterung 6 übertragen werden. Im Bereich des Getriebes 9 ist eine drehbare Lagerung der Antriebswelle 10 sowie der Schwenkwelle 5 gegeben. Die elektrische Leitung 19 befindet sich in dem Bereich zwischen Schleifring 18 und Getriebe 9 in der Drehwelle 4 innenliegend. Im Bereich des Getriebes 9 ist ein Begrenzungsstab 14 mit zwei Begrenzungselementen 15 vorgesehen, welche die maximal mögliche Auslenkung der Schwenkwelle 5 aus einer Nulllage begrenzen. Weiter sind zwei Rückstellstäbe 12 mit je zwei Rückstellfedern 13 vorgesehen, welche ein Zurückfedern der Schwenkwelle 5 in die Nulllage bewirken. Durch diese Mechanismen ist sichergestellt, dass einerseits ein zu weites und dadurch für das Getriebe 9 oder andere Teile schadhaftes Verschwenken der Schwenkwelle 5 verhindert wird und dass andererseits bei einem Ausfall des Motors 22 ein automatisches Rückstellen der Schwenkwelle 5 in die Nulllage erfolgt.

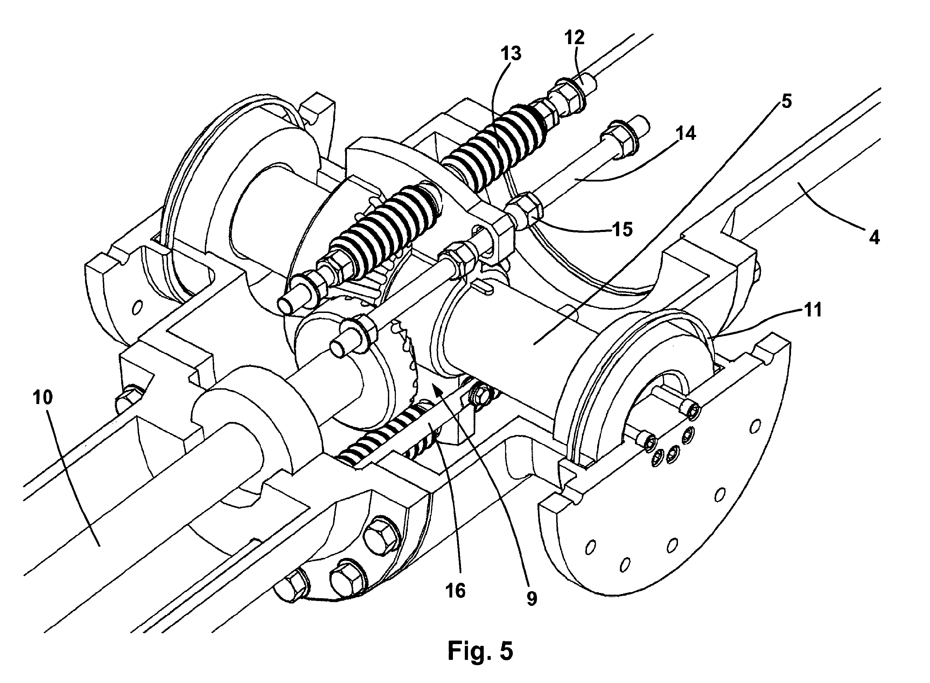

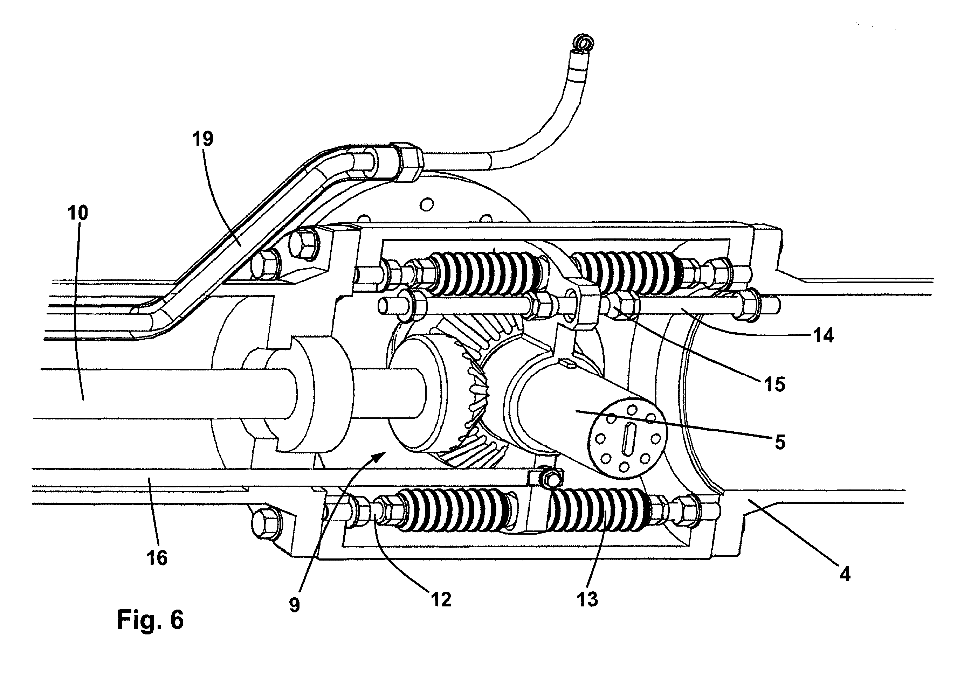

In Fig. 5 und 6 sind freigeschnittene Detailansichten des Getriebes 9 dargestellt, insbesondere von Begrenzungsmechanismus und Rückstellmechanismus. Die Rückstellstäbe 12 sowie der Begrenzungsstab 14 sind mit einem Gehäuse des Getriebes 9 und damit mit der Drehwelle 4 fest verbunden, wie dies in Fig. 6 für die Rückstellstäbe 12 erkennbar ist. Die Rückstellstäbe 12 sowie der Begrenzungsstab 14 sind in deren mittleren Bereichen durch ovale Bohrungen in einem mit der Schwenkwelle 5 fest verbundenen Getriebeteil geführt. Abhängig von einer Stellung der Schwenkwelle 5 relativ zur Drehwelle 4 können somit Rückstell- bzw. Begrenzungskräfte zwischen Drehwelle 4 und Schwenkwelle 5 wirken. Eine Abdichtung des Getriebes 9 gegen verspritzte Behandlungsflüssigkeiten erfolgt durch O-Ring-Dichtungen 11.

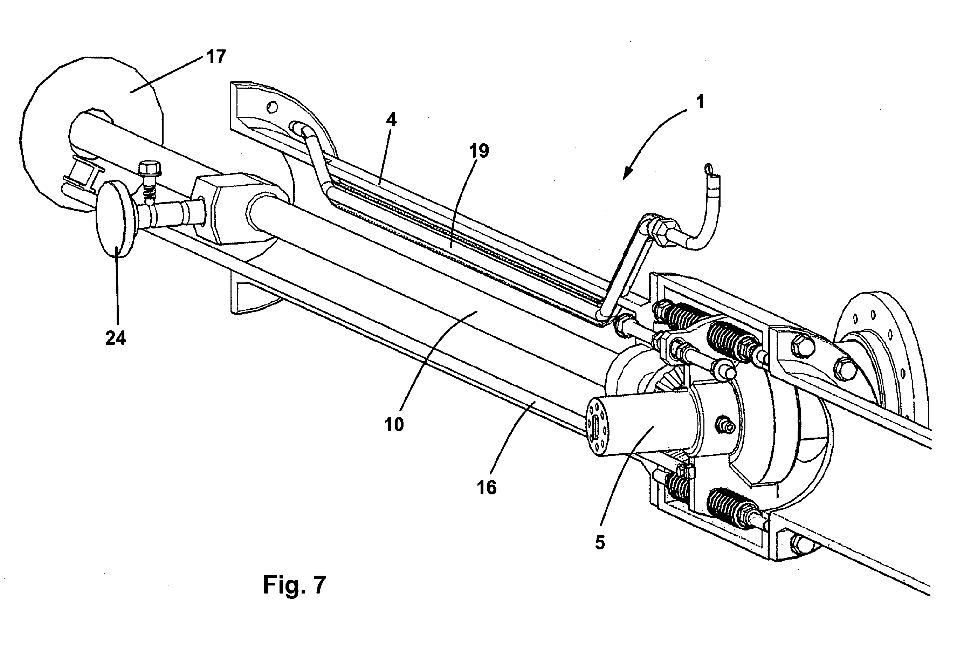

Wie ebenfalls in Fig. 6 ersichtlich, ist im Bereich des Getriebes 9 eine Übertragungsstange 16 mit der Schwenkwelle 5 drehbar und exzentrisch verbunden. Diese Übertragungsstange 16 ist Teil eines Mechanismus zur Bestimmung einer Position der Halterung 6 bzw. der Schwenkwelle 5 relativ zur Drehwelle 4. Die Funktionsweise dieses Mechanismus ist aus Fig. 7 ersichtlich. Eine Drehung der Schwenkwelle 5 bewirkt eine Verschiebung der Übertragungsstange 16 parallel zur Drehwelle 4. Mit der Übertragungsstange 16 ist eine Auslesescheibe 17 fix verbunden, welche konzentrisch zur Drehwelle 4 angeordnet ist und wie die Übertragungsstange 16 entlang der Antriebswelle 10 verschiebbar ist. Die Position der Auslesescheibe 17 und damit die Stellung der Schwenkwelle 5 kann am Transportwagen 3 z. B. mit magnetischen Sensoren zur Positionserkennung unabhängig von einer Drehung der Drehwelle 4 ausgelesen werden.

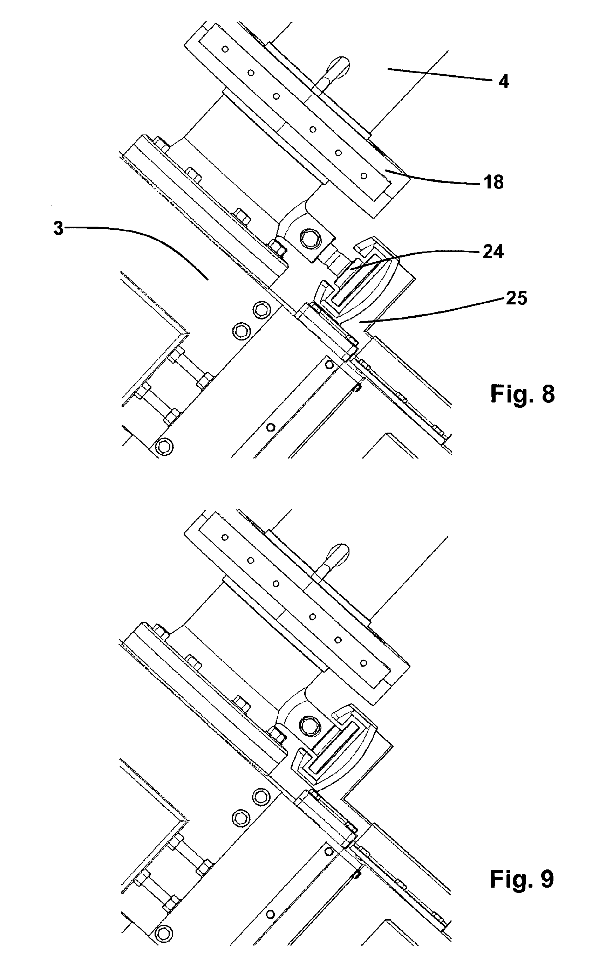

Wie in Fig. 1, 3 und 7 ersichtlich, ist im Bereich der drehbaren Lagerung der Drehwelle 4 auf dem Transportwagen 3 ein Verriegelungsmechanismus für die Antriebswelle 10 vorgesehen. Dieser umfasst eine Stellvorrichtung 25, die mit dem Transportwagen 3 verbunden ist, und einen Bolzen 24, welcher in der Drehwelle 4 radial geführt ist und in einer seiner Stellungen die Antriebswelle 10 gegen eine Rotation relativ zur Drehwelle 4 verriegelt. Durch dieses Blockieren der Antriebswelle 10 ist weiter auch die Stellung der Halterung 6 fixiert. Detailansichten des Verriegelungsmechanismus sind in Fig. 8 und 9 dargestellt. In einer vorbestimmten Drehstellung der Drehwelle 4 umschließt die Stellvorrichtung 25 den Bolzen 24 und kann diesen aus der Drehwelle 4 herausziehen (Fig. 8) oder diesen in die Drehwelle 4 hineinschieben (Fig. 9). In der herausgezogenen Stellung (Fig. 8) ist die Antriebswelle 10 frei in der Drehwelle 4 drehbar, in der hineingeschobenen Stellung (Fig. 9) ist die Antriebswelle 10 gegen eine Drehung relativ zur Drehwelle 4 verriegelt.

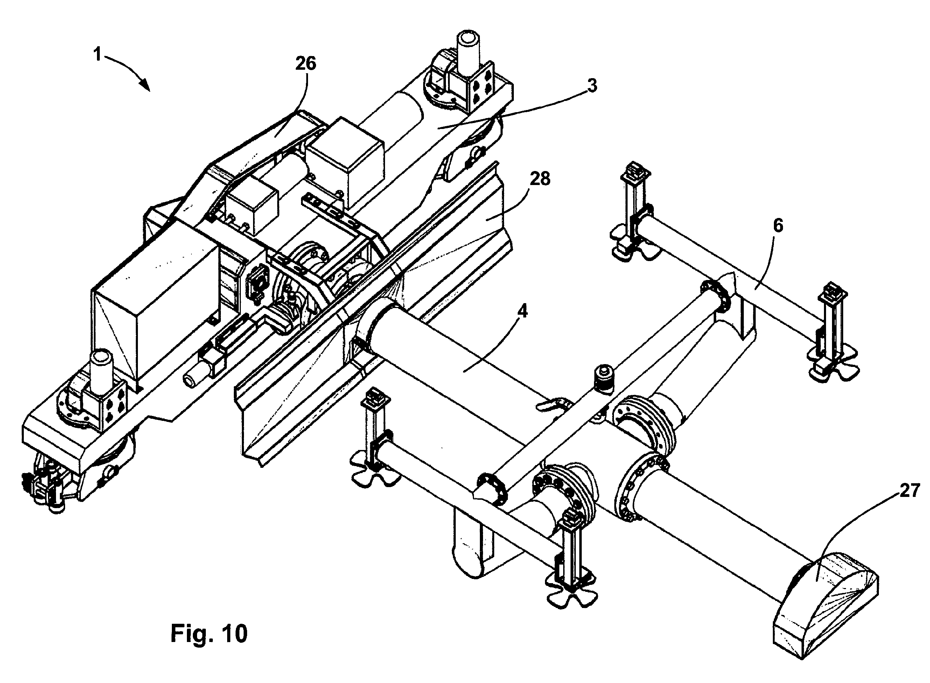

Eine weitere Ansicht der Vorrichtung 1 ist in Fig. 10 dargestellt, wobei das Stützelement 7 durch eine Abdeckung 27 und der Transportwagen 3 durch ein Schutzblech 28 gegen verspritzte Behandlungsflüssigkeiten sowie die Übersetzungen 23 durch eine Abdeckung 26 gegen Verschmutzung geschützt sind.

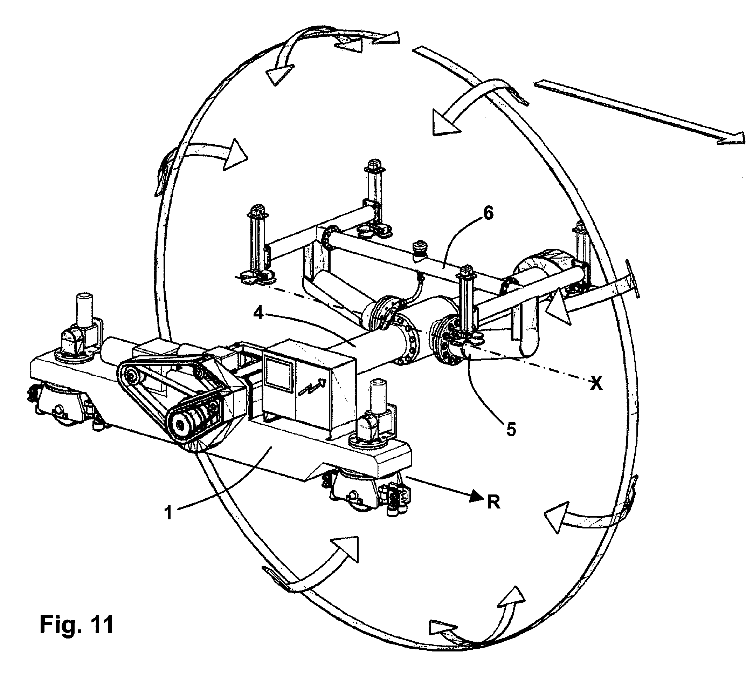

In Fig. 11 sind symbolisch die drei gleichzeitig ausführbaren Bewegungsmöglichkeiten eines zu behandelnden Gegenstandes, welcher auf der erfindungsgemäßen Vorrichtung 1 befestigt ist, dargestellt:
- Die gesamte Vorrichtung 1 kann entlang einer Transportrichtung R geradlinig, auch um Kurven, bewegt werden;
- durch eine Drehung der Drehwelle 4 kann die Halterung 6, auf welcher der zu behandelnde Gegenstand befestigt ist, um 360° um die Drehwelle 4 gedreht werden, wobei diese Drehung zum Einbringen bzw. Ausbringen des Gegenstandes in ein bzw. aus einem Behandlungsbad dient;
- in sämtlichen dieser Drehstellungen der Drehwelle 4 kann ein Hin- und Herschwenken der Schwenkwelle 5 und der mit dieser verbundenen Halterung 6 um die zur Drehwelle 4 senkrechten Achse X erfolgen.

Dadurch ergibt sich die durch Pfeile symbolisierte Vielzahl von gleichzeitig ausführbaren Bewegungsmöglichkeiten für den zu behandelnden Gegenstand. Dies ist von entscheidendem Vorteil sowohl im eingetauchten Zustand des Gegenstandes in einem Behandlungsbad, um eingeschlossene Luft entweichen lassen oder zumindest verschieben zu können, als auch außerhalb eines Behandlungsbades, um Behandlungsflüssigkeiten ablaufen bzw. abtropfen lassen zu können.

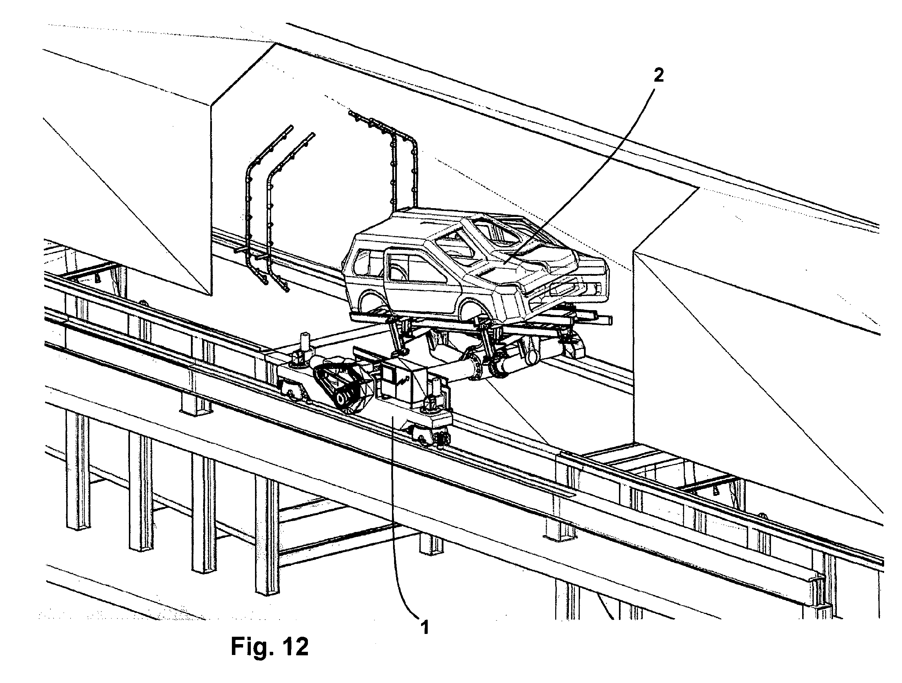

In Fig. 12 ist eine Verwendung der erfindungsgemäßen Vorrichtung 1 als Förderfahrzeug zum Befördern einer Karosserie 2 entlang einer Behandlungsstrecke dargestellt. Die Behandlungsstrecke umfasst Absprühzonen, Tauchbäder und Abtropfzonen.

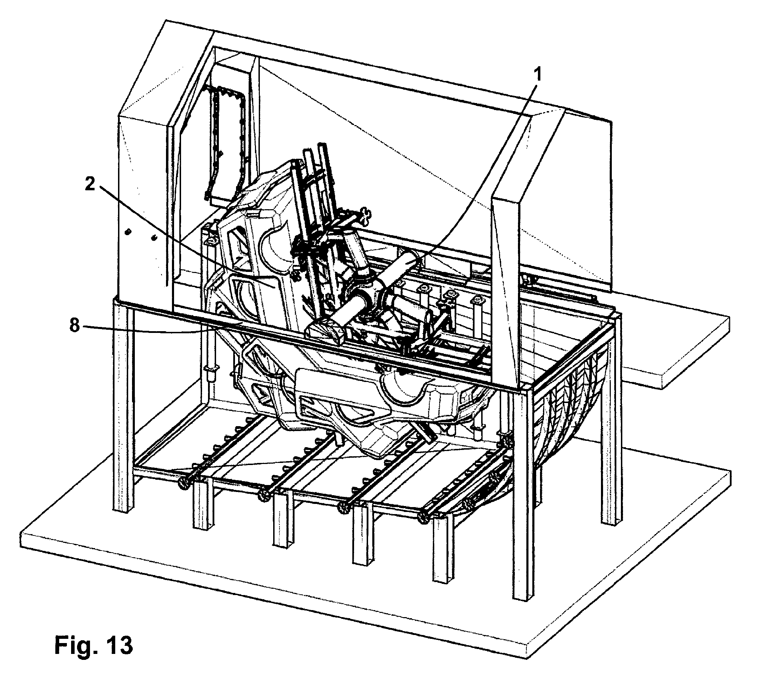

In Fig. 13 ist ein Einbringen der Karosserie 2 in ein Behandlungsbad dargestellt. Ein Eintauchen erfolgt durch ein Drehen der Drehwelle 4, deren freies Ende von dem Stützelement 7 auf einer Fläche 8 neben dem Behandlungsbecken abgestützt und vom Transportwagen 3 automatisch mitgeführt wird.

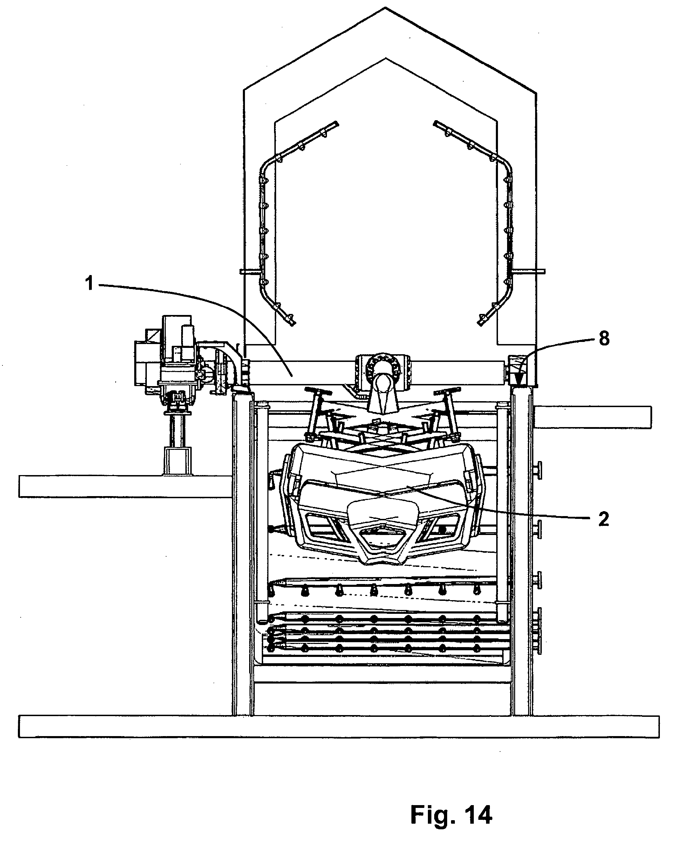

In Fig. 14 ist ein eingetauchter Zustand der Karosserie 2 dargestellt, wobei das Stützelement 7 auf einer Fläche 8 neben dem Behandlungsbecken geführt wird. Durch ein Schwenken der Schwenkwelle 5 kann die Karosserie 2 seitlich verschwenkt werden. Dies kann auch gleichzeitig mit einem Drehen der Drehwelle 4 erfolgen, Dadurch kann in der Karosserie 2 eingeschlossen Luft entweichen oder zumindest hin- und herbewegt werden, wodurch eine vollständige Benetzung der Oberfläche der Karosserie 2 mit Behandlungsflüssigkeit erreicht wird. Dadurch erübrigt sich eine aufwendige Konstruktion von Behandlungsbecken mit Düsen, welche Strömungen in der Behandlungsflüssigkeit erzeugen und so wesentlich aufwendiger die Luft aus der Karosserie 2 verdrängen. Des Weiteren ist in Fig. 14 ersichtlich, dass sich seitlich und unterhalb der Karosserie 2 keine Teile der Vorrichtung 1 befinden. Dadurch kann das Behandlungsbecken in seiner lateralen Ausdehnung sehr klein gehalten werden und die Karosserie 2 ist von allen Seiten optimal zugänglich, wodurch eine hohe Beschichtungsqualität erreicht werden kann. Da nur wenige Teile der Vorrichtung 1 in die Behandlungsflüssigkeit eintauchen, ist der Schmutzeintrag äußerst gering. Des Weiteren ist sehr gut erkennbar, dass keine Drehverbindungen der Vorrichtung 1 unter den Spiegel der Behandlungsflüssigkeit eingetaucht werden. Somit wird die Verschmutzung der Behandlungsflüssigkeit durch Schmiermittel weitestgehend vermieden und es sind nur Dichtungen bzw. Abdeckungen gegen verspritzte Behandlungsflüssigkeit notwendig. Der Transportwagen 3 befindet sich zur Gänze seitlich des Behandlungsbeckens, wodurch der Schmutzeintrag in die Behandlungsflüssigkeit sehr klein gehalten werden kann. Außerdem kann der Transportwagen 3 durch Abschirmungen einfach vor Behandlungsflüssigkeitsdämpfen geschützt werden, wodurch Korrosion vermindert wird. Dabei bleibt der Transportwagen 3 von außen für Kontroll- und Wartungsarbeiten einfach zugänglich.

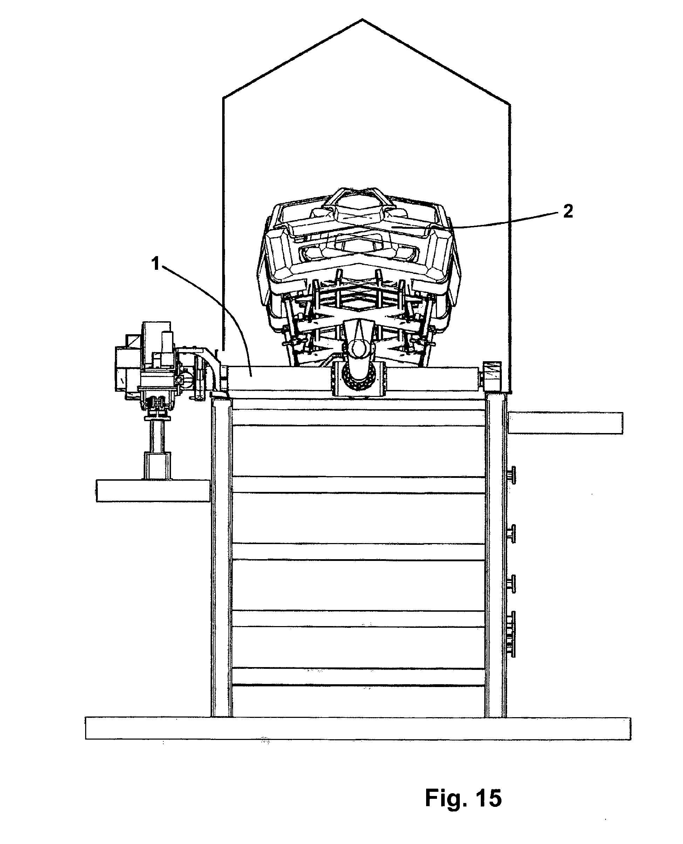

Fig. 15 zeigt die Vorrichtung 1 nach Ausbringen der Karosserie 2 aus dem Behandlungsbad. Im Bereich einer solchen Abtropfzone wird durch seitliches Hin- und Herschwenken der Karosserie 2, das gleichzeitig mit einem Drehen der Drehwelle 4 erfolgen kann, ein effizientes Entleeren bzw. Abtropfen der Karosserie 2 erreicht, um Verschleppung von Behandlungsflüssigkeit zum nachfolgenden Behandlungsbecken so gering wie möglich zu halten. Weiter ist ersichtlich, dass sich im ausgetauchten Zustand der Karosserie 2 keine Teile der Vorrichtung 1 seitlich oder oberhalb der Karosserie 2 befinden. Dadurch ist in Absprühzonen der Behandlungsstrecke eine optimale Zugänglichkeit und damit ein gutes Absprühen gewährleistet. Auch befinden sich keine Teile der Fördertechnik über der Karosserie 2, welche diese verschmutzen könnten.

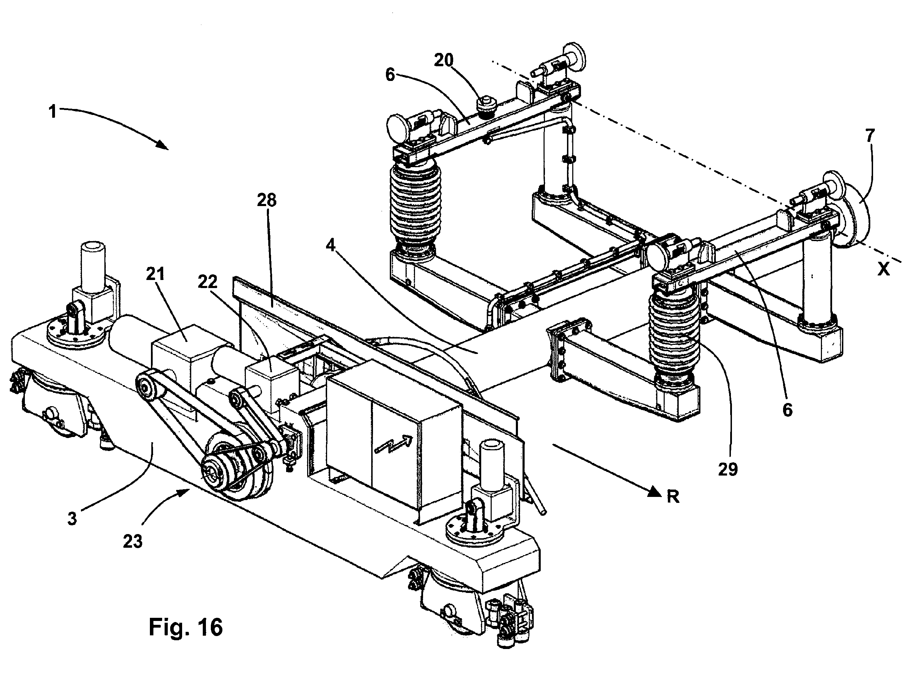

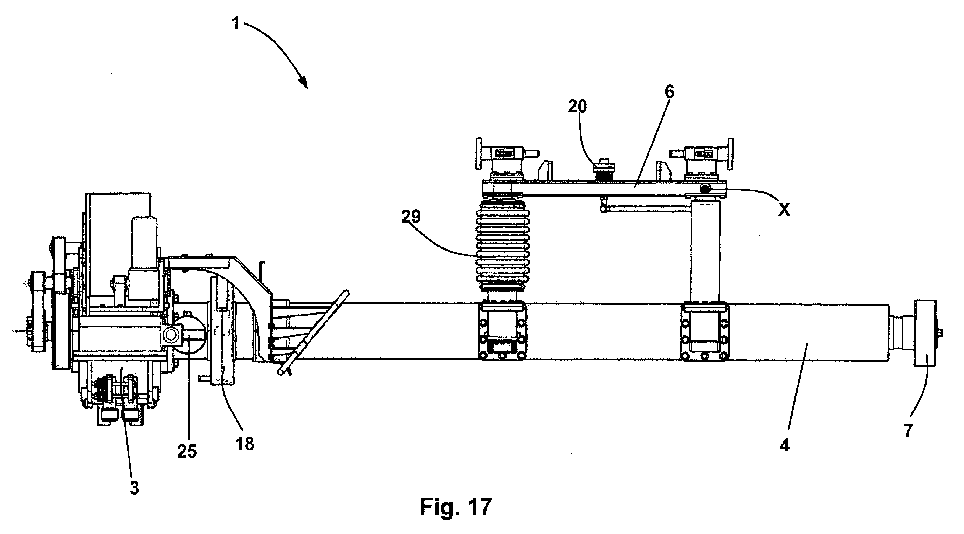

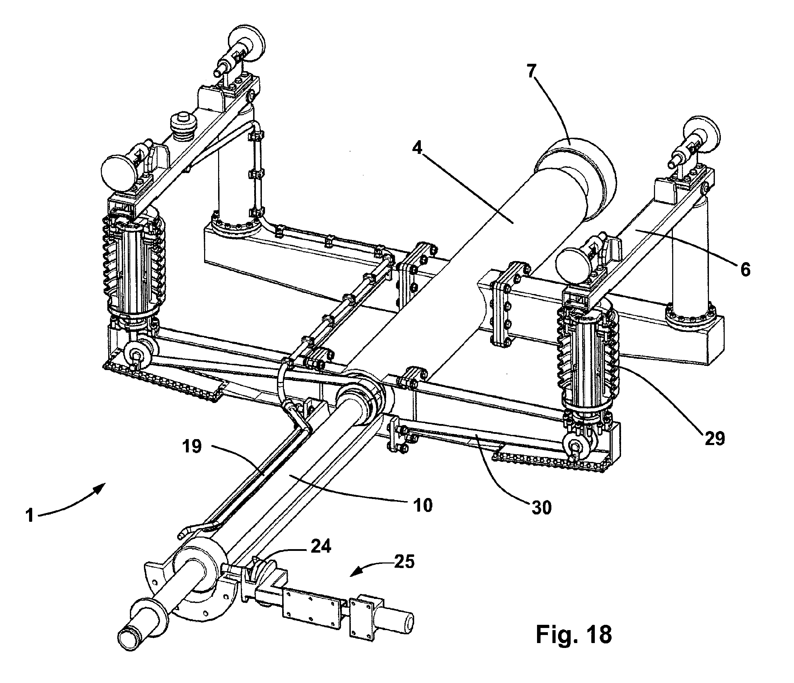

In Fig. 16 bis 18 ist eine weitere Ausführungsform einer erfindungsgemäßen Vorrichtung 1 dargestellt. Die Grundbestandteile Transportwagen 3, Drehwelle 4, Halterung 6 und Stützelement 7 sind gleich wie bei der vorhergehend erläuterten Ausführungsform. Bei dieser weiteren Ausführungsform sind zwischen der Drehwelle 4 und der Halterung 6 Federelemente 29 vorgesehen. Die Halterung 6 ist schwenkbar um eine Achse X gelagert. Wie in Fig. 18 ersichtlich, ist ein Riemen 30 an der Antriebswelle 10 und der Halterung 6 fixiert. Durch Drehen der Antriebswelle 10 wird der Riemen 30 auf der Antriebswelle auf- bzw. abgerollt. Durch ein Aufrollen des Riemens 30 wird die Halterung 6 gegen eine Federkraft der Federelemente 29 in Richtung der Drehwelle 4 gezogen, was ein Vorspannen der Federelemente 29 bewirkt. Durch Abrollen des Riemens 30 wird die Halterung 6 durch die Federkraft der Federelemente 29 in die entgegengesetzte Richtung gedrückt, wobei sich die Federelemente 29 entspannen. Das Auf- und Abrollen des Riemens 30 bewirkt daher ein Hin- und Herschwenken der Halterung 6 um die Achse X. Die weiteren in den Fig. 16 bis 18 gekennzeichneten Elemente Motoren 21, 22, Übersetzungen 23, Schutzblech 28, Schleifring 18, elektrische Leitung 19, elektrischer Anschluss 20, Bolzen 24 und Stellvorrichtung 25 sind gleich wie in der in den vorigen Abbildungen beschriebenen Ausführungsform. Die sich aus der in den Fig. 16 bis 18 beschriebenen Ausführungsform der Vorrichtung 1 ergebenden Bewegungsmöglichkeiten für einen auf der Halterung 6 befestigten zu behandelnden Gegenstand sind die gleichen wie in Fig. 11 dargestellt. Die Federelemente 29 sind bei der in den Fig. 16 bis 18 dargestellten Ausführungsform der Vorrichtung 1 nicht zwingend erforderlich. Das Hin- und Herschwenken der Halterung 6 ist dann aber auf Stellungen der Drehwelle 4 beschränkt, bei denen ein kontrolliertes Verschwenken aus einer Nulllage um die Achse X unter Ausnutzung der Schwerkraft erfolgen kann. Das Verschwenken besteht dabei aus einem Ablassen eines Teiles der Halterung 6 unter Ausnutzung der Schwerkraft und einem Zurückziehen mittels des Riemens 30. Ein Einbringen in ein Behandlungsbad erfolgt dann in folgenden Schritten: Eine auf der Halterung 6 befestigte Karosserie 2 befindet sich oberhalb der Vorrichtung 1 und die Halterung 6 ist in der Nulllage verriegelt, z. B. dadurch, dass der Bolzen 24 die Antriebswelle 10 gegen eine Drehung relativ zur Drehwelle 4 verriegelt; durch Drehen der Drehwelle 4 wird die Karosserie 2 in das Behandlungsbad eingetaucht. Sobald eine Komponente der auf die Karosserie 2 wirkenden Schwerkraft von der Drehwelle 4 weg weist, kann nach Entriegelung der Halterung 6 diese durch Ab- bzw. Aufrollen des Riemens 30 um die Achse X verschwenkt werden. Nach dem Hin- und Herschwenken wird die Halterung 6 wieder in deren Nulllage verriegelt und die Karosserie 2 durch Drehen der Drehwelle 4 aus dem Behandlungsbad ausgebracht.

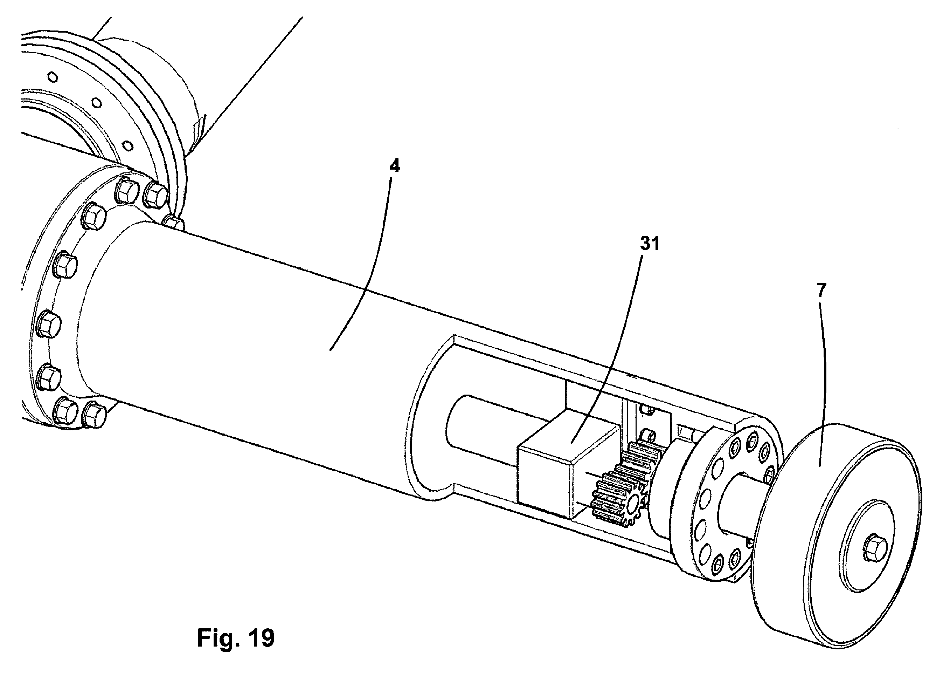

In Fig. 19 ist ein freies Ende einer Drehwelle 4 einer Vorrichtung 1 mit aktiv angetriebenem Stützelement 7 gezeigt. Das freie Ende der Drehwelle 4 ist aufgeschnitten dargestellt, sodass ein in der Drehwelle 4 innenliegender Motor 31 erkennbar ist, welcher das als Rolle ausgebildete Stützelement 7 antreibt. Diese Ausführungsform ist von Vorteil, wenn schwere Gegenstände befördert werden sollen, beispielsweise große Karosserien 2 wie Buskarosserien. Für besonders schwere Karosserien 2 kann anstelle des Stützelementes 7 auch ein weiterer Transportwagen 3 vorgesehen sein, welcher das zweite Ende der Drehwelle 4 mitführt und antreibt.

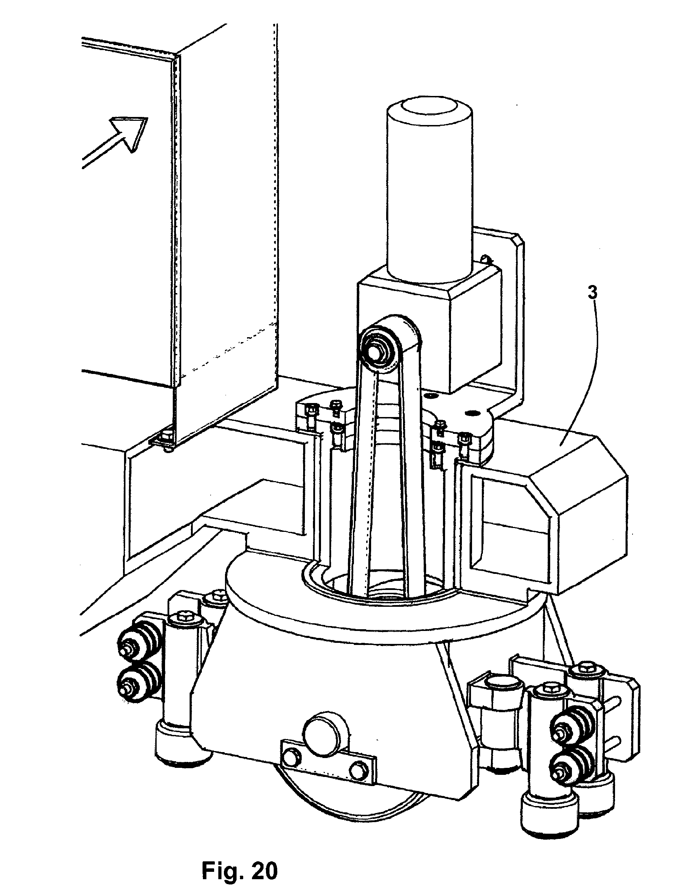

Fig. 20 zeigt eine aufgeschnittene Detailansicht eines Fahrwerkes eines Transportwagens 3. Ein Rad des Transportwagens 3 sowie dessen Motor sind drehbar um eine vertikale Achse am Transportwagen 3 gelagert. Damit können Vorrichtungen 1 gemäß Fig. 1 oder Fig. 16, welche eine 3-Punkt-Auflage aufweisen, entlang von Schienen mit sehr engen Kurven, d. h. mit besonders kleinem Kurvenradius, bewegt werden. So kann z. B. eine platzsparende 180°-Kurve gefahren werden, nach der sich die Behandlungsstrecke wieder fortsetzt.

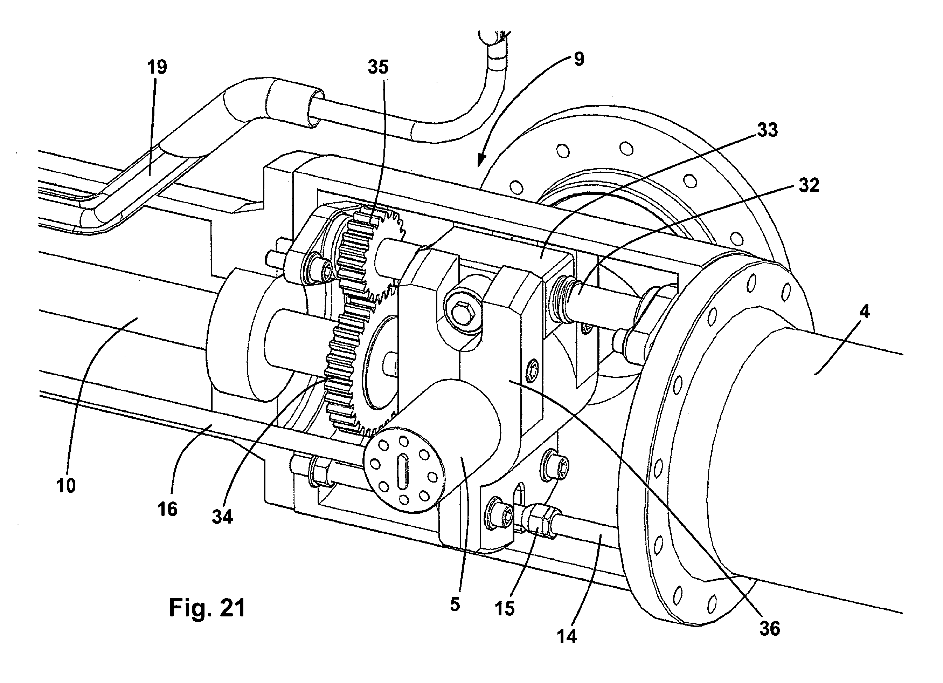

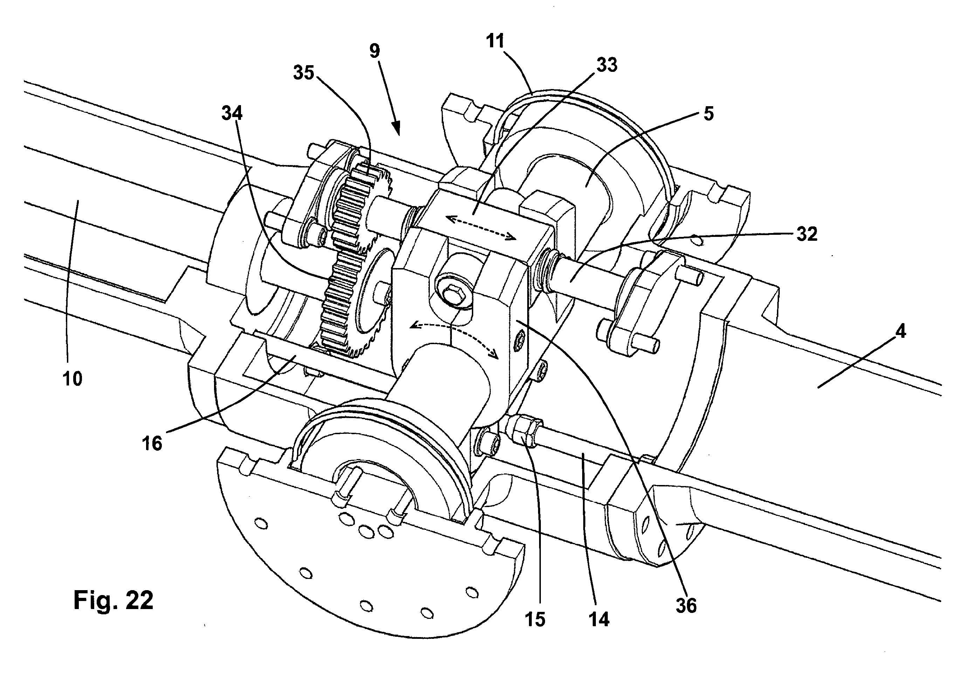

In Fig. 21 und 22 sind freigeschnittene Detailansichten des Getriebes 9 dargestellt, welches in dieser dargestellten zweiten Ausführungsvariante ein Schraub- bzw. Spindelgetriebe umfasst. Abgesehen vom Bewegungsmechanismus ist die Vorrichtung 1 in dieser Ausführungsvariante analog aufgebaut wie die zuvor beschriebene. Im Bereich des Getriebes 9 ist eine drehbare Lagerung der Antriebswelle 10 sowie der Schwenkwelle 5 gegeben. Durch das dargestellte Schraubengetriebe kann eine Rotation der Antriebswelle 10 auf die Schwenkwelle 5 sowie auf die mit dieser verbundene Halterung 6 übertragen werden. Dazu ist eine parallel zur Drehwelle 4 und zur Antriebswelle 10 ausgerichtete Gewindespindel 32 vorgesehen, welche im Bereich des Kreuzungspunktes von Drehwelle 4 und Schwenkwelle 5 innerhalb eines Gehäuses angeordnet ist. Die Gewindespindel 32 ist drehbar am Gehäuse gelagert und weist ein Gewinde auf. Im Bereich eines ihrer Enden ist ein Zahnrad 35 drehfest mit der Gewindespindel 32 verbunden. Ein weiteres Zahnrad 34 befindet sich an einem Ende der Antriebswelle 10 und ist mit dieser drehfest verbunden. Durch eine Wirkverbindung zwischen den beiden Zahnrädern 34, 35, d. h. durch ein Ineinandergreifen der beiden Zahnräder 34, 35, wird eine Rotation der Antriebswelle 10 auf die Gewindespindel 32 übertragen. Im Bereich des Gewindes auf der Gewindespindel 32 ist eine Spindelmutter 33 angeordnet, welche die Gewindespindel 32 umschließt und ein entsprechendes Gegengewinde aufweist. Die Gewindespindel 32 ist also in die Spindelmutter 33 einschraubbar und im Bereich des Gewindes in der Spindelmutter 33 hin- und herschraubbar. Mit der Schwenkwelle 5 ist ein Element 36 drehfest verbunden, welches die Spindelmutter 33 teilweise umschließt. Das Element 36 ist derart ausgebildet, dass es ein Verdrehen der Spindelmutter 33 um die Gewindespindel 32 verhindert und dass eine Translation der Spindelmutter 33 parallel zur Gewindespindel 32 in eine Rotation der Schwenkwelle 5 um die Achse X übersetzt wird. Hierfür ist eine Führung zwischen der Spindelmutter 33 und dem Element 36 vorgesehen, sodass Spindelmutter 33 und Element 36 um eine Achse senkrecht zur Gewindespindel 32 gegeneinander verdrehbar und senkrecht zur Gewindespindel 32 gegeneinander verschiebbar sind. Eine Translation der Spindelmutter 33 parallel zur Gewindespindel 32 erfolgt durch Rotation der Gewindespindel 32, wobei die Spindelmutter 33 durch das Gewinde geführt wird. Dabei wird eine Drehbewegung der Gewindespindel 32 in eine translatorische Bewegung der Spindelmutter 33 übersetzt. Eine Übertragung der Rotation der Antriebswelle 10 auf die Schwenkwelle 5 erfolgt also in folgenden Schritten: Die Rotation des mit der Antriebswelle 10 drehfest verbundenen Zahnrades 34 bewirkt eine Rotation des Zahnrades 35 und damit der Gewindespindel 32. Diese Rotation bewirkt durch das Gewinde auf der Gewindespindel 32 bzw. in der Spindelmutter 33 eine Translation der Spindelmutter 33 parallel zur Gewindespindel 32, da ein Verdrehen der Spindelmutter 33 durch Führung in dem Element 36 verhindert wird. Diese Translation der Spindelmutter 33 wird in ein Verschwenken des Elementes 36 und über dieses weiter in ein Verschwenken bzw. in eine Drehbewegung der Schwenkwelle 5 übersetzt. Ein besonderer Vorteil einer Vorrichtung 1 mit dem beschriebenen Schraubgetriebe liegt darin, dass das Getriebe 9 dadurch selbstblockierend ist; bei einem Stromausfall oder einem Defekt des Motors 22 kann somit ein unkontrolliertes Verschwenken der Schwenkwelle 5 und damit der Halterung 6 und des darauf befestigten Gegenstandes wie einer Karosserie verhindert werden.

Des Weiteren ist im Bereich des Getriebes 9 ein Begrenzungsmechanismus vorgesehen, welcher einen mit dem Gehäuse des Getriebes 9 fest verbundenen Begrenzungsstab 14 und auf dem Begrenzungsstab 14 angeordnete Begrenzungselemente15 umfasst. Der Begrenzungsstab 14 ist in seinem mittleren Bereich durch einen Auslass in dem mit der Schwenkwelle 5 fest verbundenen Element 36 geführt. Dadurch kann die maximal mögliche Auslenkung der Schwenkwelle 5 aus einer Nulllage begrenzt werden. Des Weiteren wird ein Verschwenken der Schwenkwelle 5 im Bereich des Getriebes 9 in eine Verschiebung einer Übertragungsstange 16 übersetzt. Die Übertragungsstange 16 ist Teil eines Mechanismus zur Bestimmung einer Position der Halterung 6 und ist mit einer Auslesescheibe 17 fix verbunden (Fig. 3). Eine Abdichtung des Getriebes 9 gegen verspritzte Behandlungsflüssigkeiten erfolgt durch O-Ring-Dichtungen 11.

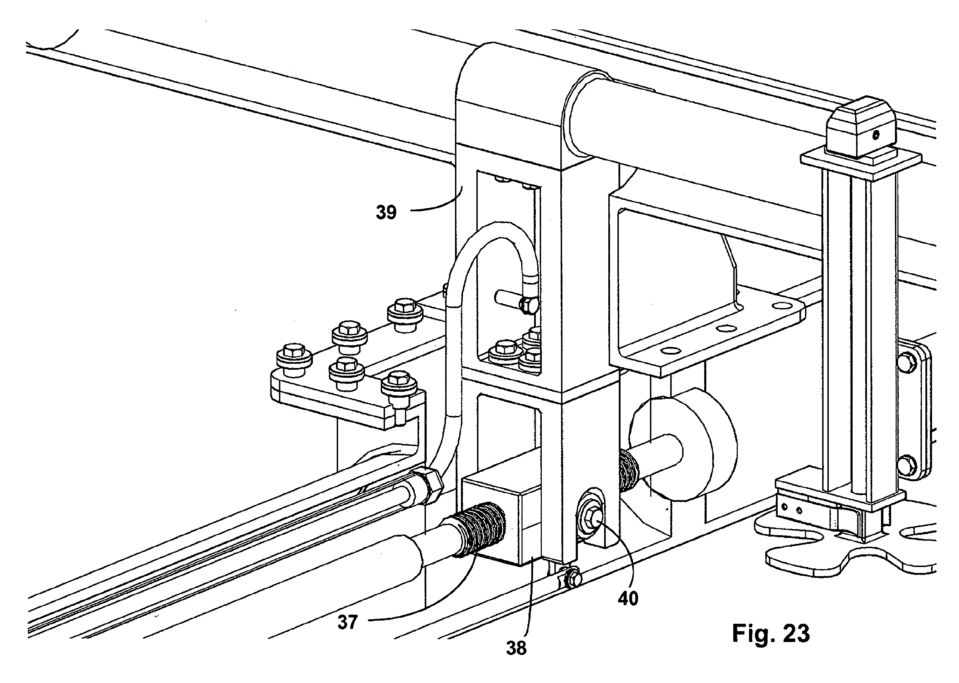

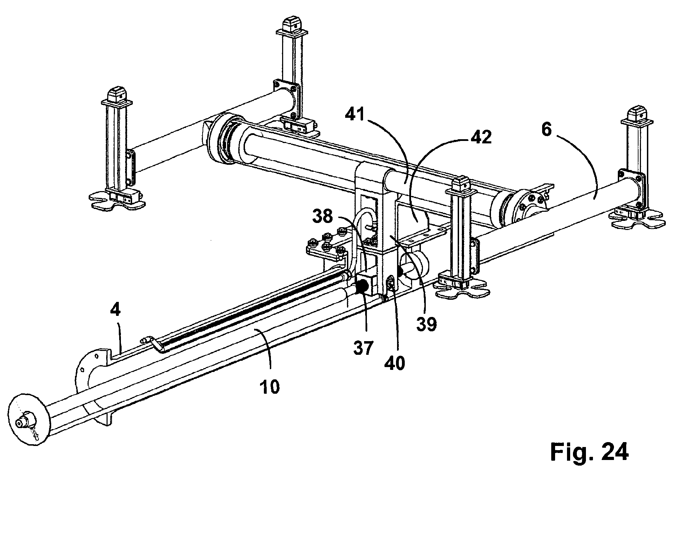

In Fig. 23 und 24 ist eine dritte Ausführungsvariante eines in der Drehwelle 4 angeordneten Bewegungsmechanismus dargestellt. Im Übrigen ist die Vorrichtung 1 ähnlich aufgebaut wie eine Vorrichtung 1 gemäß dem ersten und dem zweiten Ausführungsbeispiel, die zuvor beschrieben sind. Die in Fig. 23 und 24 dargestellte Ausführungsvariante unterscheidet sich von den zuvor dargestellten Ausführungsvarianten dadurch, dass zum Bewegen der Halterung 6 an der Antriebswelle 10 eine Spindel 37 vorgesehen ist, die integral mit der Antriebswelle 10 ausgeführt ist. Die an der Antriebswelle 10 vorgesehene Spindel 37 greift in einen Lagerbock 38 bzw. einen Mutterblock ein, der mit seitlichen Vorsprüngen 40 versehen ist, die beidseits abstehen. Auf diesen Vorsprüngen 40 ist ein Verbindungselement 39 angeordnet, das endseitig offene Fortsätze aufweist, sodass die Vorsprünge 40 umfasst sind. Greift die Spindel 37 bei Antrieb durch die Antriebswelle 10 in den Lagerbock 38 ein, so ziehen oder drücken die Vorsprünge 40 auf die Fortsätze des Verbindungselementes 39, das über eine weitere Welle 41 mit der Halterung 6 in Verbindung steht und diese entsprechend bewegt. Um dies zu ermöglichen, ist die weitere Welle 41 innerhalb eines rohrförmigen Abschnittes 42 gehalten, der mit der Drehwelle 4 starr verbunden ist.

## Patentansprüche

1. Vorrichtung (1) zum Befördern eines zu behandelnden Gegenstandes, insbesondere einer Karosserie (2), entlang einer Behandlungsstrecke, umfassend zumindest einen Transportwagen (3), der in einer Transportrichtung (R) entlang der Behandlungsstrecke bewegbar ist, eine Drehwelle (4), die zumindest etwa senkrecht zur Transportrichtung (R) und zumindest etwa waagrecht ausgerichtet oder ausrichtbar ist und im Bereich eines Endes an dem zumindest einen Transportwagen (3) um eine Achse der Drehwelle (4) drehbar gelagert ist, sowie eine mit der Drehwelle (4) mittelbar oder unmittelbar verbundene Halterung (6) für den zu behandelnden Gegenstand, wobei die Halterung (6) schwenkbar um eine Achse (X) gelagert ist, wobei die Achse (X) zumindest etwa senkrecht zur Drehwelle (4) ausgerichtet ist, **dadurch gekennzeichnet, dass** eine zumindest teilweise in der Drehwelle (4) innenliegende Antriebswelle (10) vorgesehen ist, wobei eine Drehung der Antriebswelle (10) ein Schwenken der Halterung (6) um die Achse (X) bewirkt.

2. Vorrichtung (1) nach Anspruch 1, **dadurch gekennzeichnet, dass** zumindest ein Zugmittel, insbesondere ein Riemen (30), das bzw. der mittelbar oder unmittelbar an der Antriebswelle (10) und der Halterung (6) befestigt ist, sowie optional zumindest ein Federelement (29) zwischen Drehwelle (4) und Halterung (6) vorgesehen sind, wobei die Drehung der Antriebswelle (10) ein Auf- bzw. Abrollen des zumindest einen Zugmittels bewirkt, wodurch die Halterung (6) gegebenenfalls gegen eine Federkraft aus einer Nulllage verschwenkbar ist.

3. Vorrichtung (1) nach Anspruch 1, **dadurch gekennzeichnet, dass** zur schwenkbaren Lagerung der Halterung (6) eine Schwenkwelle (5) vorgesehen ist, welche die Halterung (6) trägt und welche auf der Drehwelle (4) um die Achse (X) schwenkbar gelagert ist.

4. Vorrichtung (1) nach Anspruch 3, **dadurch gekennzeichnet, dass** in einem Lagerungsbereich der Schwenkwelle (5) auf der Drehwelle (4) ein Getriebe (9) vorgesehen ist, sodass eine Rotation der Antriebswelle (10) auf die Schwenkwelle (5) übertragbar ist.

5. Vorrichtung (1) nach Anspruch 4, **dadurch gekennzeichnet, dass** das Getriebe (9) als Kegelradgetriebe zwischen Antriebswelle (10) und Schwenkwelle (5) ausgeführt ist.

6. Vorrichtung (1) nach Anspruch 4, **dadurch gekennzeichnet, dass** das Getriebe (9) ein Schraubgetriebe umfasst.

7. Vorrichtung (1) nach Anspruch 6, **dadurch gekennzeichnet, dass** das Schraubgetriebe eine Gewindespindel (32) und eine Spindelmutter (33) umfasst, wobei die Spindelmutter (33) auf der Gewindespindel (32) angeordnet ist und diese umschließt, sodass sich die Spindelmutter (33) bei Drehung der Gewindespindel (32) entlang einer Achse der Gewindespindel (32) fortbewegt.

8. Vorrichtung (1) nach Anspruch 7, **dadurch gekennzeichnet, dass** Zahnräder (34, 35) als Teil des Getriebes (9) vorgesehen sind, welche eine Rotation der Antriebswelle (10) auf die Gewindespindel (32) übertragen.

9. Vorrichtung (1) nach Anspruch 7 oder 8, **dadurch gekennzeichnet, dass** ein Element (36) als Teil des Getriebes (9) vorgesehen ist, welches mit der Schwenkwelle (5) drehfest verbunden ist und eine Translation der Spindelmutter (33) in eine Rotation der Schwenkwelle (5) übersetzt.

10. Vorrichtung (1) nach Anspruch 1, **dadurch gekennzeichnet, dass** auf der Antriebswelle (10) eine Spindel (37) angeordnet ist, die in einen Lagerbock (38) eingreift, auf dem die Halterung (6) schwenkbar gelagert ist.

11. Vorrichtung (1) nach Anspruch 10, **dadurch gekennzeichnet, dass** die Halterung (6) mit einem Verbindungselement (39) gehalten ist, das endseitig mit Öffnungen (39) ausgebildet ist, in welche Vorsprünge (40) des Lagerbocks (38) eingreifen.

12. Vorrichtung (1) nach einem der Ansprüche 1 bis 11, **dadurch gekennzeichnet, dass** ein Verriegelungsmechanismus für die Antriebswelle (10) vorgesehen ist, welcher einen in der Drehwelle (4) geführten Bolzen (24) und zumindest eine an dem zumindest einen Transportwagen (3) befestigte Stellvorrichtung (25) für den Bolzen (24) umfasst, wobei die zumindest eine Stellvorrichtung (25) den Bolzen (24) bei einer vorgegebenen Position der Drehwelle (4) umschließt, der Bolzen (24) sodann in verschiedene Stellungen bringbar ist und der Bolzen (24) in einer dieser Stellungen die Antriebswelle (10) gegen eine Rotation relativ zur Drehwelle (4) verriegelt.

13. Vorrichtung (1) nach einem der Ansprüche 1 bis 12, **dadurch gekennzeichnet, dass** im Bereich eines freien Endes der Drehwelle (4) ein Stützelement (7) vorgesehen ist, das die Drehwelle (4) abstützt.

14. Vorrichtung (1) nach Anspruch 13, **dadurch gekennzeichnet, dass** das Stützelement (7) eine angetriebene oder antriebslose Rolle ist, die auf der Drehwelle (4) drehbar gelagert ist.

15. Vorrichtung (1) nach einem der Ansprüche 1 bis 14, **dadurch gekennzeichnet, dass** ein Rückstellmechanismus zur automatischen Rückstellung der Halterung (6) in eine Nulllage vorgesehen ist.

16. Vorrichtung (1) nach einem der Ansprüche 1 bis 15, **dadurch gekennzeichnet, dass** ein Begrenzungsmechanismus zur vorbestimmten Begrenzung einer Auslenkung der Halterung (6) aus deren Nulllage vorgesehen ist.

17. Vorrichtung (1) nach einem der Ansprüche 1 bis 16, **dadurch gekennzeichnet, dass** ein Mechanismus zur Bestimmung einer Position der Halterung (6) vorgesehen ist.

18. Verwendung einer Vorrichtung (1) gemäß den Ansprüchen 1 bis 17 zum Reinigen und Tauchlackieren von Karosserien (2).

## Claims

1. A device (1) for transporting an object to be treated, particularly a car body (2), along a treatment section, comprising at least one transport carriage (3) that can be moved along the treatment section in a transport direction (R), a rotating shaft (4) that is or can be at least approximately aligned perpendicular to the transport direction (R), as well as at least approximately aligned horizontally, and is in the region of one end supported on the at least one transport carriage (3) such that it is rotatable about an axis of the rotating shaft (4), and a mounting (6) for the object to be treated that is directly or indirectly connected to the rotating shaft (4), wherein the mounting (6) is supported such that it can be pivoted about an axis (X), and wherein the axis (X) is at least approximately aligned perpendicular to the rotating shaft (4), **characterized in that** a drive shaft (10) is provided and at least partially lies within the rotating shaft (4), wherein a rotation of the drive shaft (10) causes a pivoting motion of the mounting (6) about the axis (X).

2. The device (1) according to Claim 1, **characterized in that** at least one power transmission means, particularly a belt (30), is provided and directly or indirectly fixed on the drive shaft (10) and the mounting (6), and **in that** at least one spring element (29) is optionally provided between the rotating shaft (4) and the mounting (6), wherein the rotation of the drive shaft (10) respectively causes the at least one power transmission means to roll up or unroll such that the mounting (6) is pivoted out of the zero position, if applicable, against a spring force.

3. The device (1) according to Claim 1, **characterized in that** a pivoting shaft (5) is provided for pivotably supporting the mounting (6), wherein the pivoting shaft carries the mounting (6) and is supported on the rotating shaft (4) such that it can be pivoted about the axis (X).

4. The device (1) according to Claim 3, **characterized in that** a gear mechanism (9) is provided in the region, in which the pivoting shaft (5) is supported on the rotating shaft (4), such that a rotation of the drive shaft (10) can be transmitted to the pivoting shaft (5).

5. The device (1) according to Claim 4, **characterized in that** the gear mechanism (9) is realized in the form of a bevel gear mechanism between the drive shaft (10) and the pivoting shaft (5).

6. The device (1) according to Claim 4, **characterized in that** the gear mechanism (9) comprises a spiral gearing.

7. The device (1) according to Claim 6, **characterized in that** the spiral gearing comprises a threaded spindle (32) and a spindle nut (33), wherein the spindle nut (33) is arranged on and encloses the threaded spindle (32) such that the spindle nut (33) moves along an axis of the threaded spindle (32) during a rotation of the threaded spindle (32).

8. The device (1) according to Claim 7, **characterized in that** gears (34, 35) are provided as part of the gear mechanism (9) and transmit a rotation of the drive shaft (10) to the threaded spindle (32).

9. The device (1) according to Claim 7 or 8, **characterized in that** an element (36) is provided as part of the mechanism (9), wherein said element is connected to the pivoting shaft (5) in a rotationally rigid fashion and converts a translational motion of the spindle nut (33) into a rotational motion of the pivoted shaft (5).

10. The device (1) according to Claim 1, **characterized in that** a spindle (37) is arranged on the drive shaft (10) and engages into a pillow block (38), on which the mounting (6) is pivotably supported.

11. The device (1) according to Claim 10, **characterized in that** the mounting (6) is held by a connecting element (39), the ends of which are realized with openings (39), into which projections (40) of the pillow block (38) engage.

12. The device (1) according to one of Claims 1 to 11, **characterized in that** a locking mechanism for the drive shaft (10) is provided and comprises a bolt (24) that is guided in the rotating shaft (4) and at least one adjusting device (25) for the bolt (24) that is fixed on the at least one transport carriage (3), wherein the at least one adjusting device (25) encloses the bolt (24) in a predefined position of the rotating shaft (4) such that the bolt (24) can be moved into different positions and the bolt (24) locks the drive shaft (10) against rotating relative to the rotating shaft (4) in one of these positions.

13. The device (1) according to one of Claims 1 to 12, **characterized in that** a supporting element (7) is provided in the region of a free end of the rotating shaft (4) and supports the rotating shaft (4).

14. The device (1) according to Claim 13, **characterized in that** the supporting element (7) consists of a driven or non-driven roller that is rotatably supported on the rotating shaft (4).

15. The device (1) according to one of Claims 1 to 14, **characterized in that** a resetting mechanism is provided for automatically returning the mounting (16) into a zero position.

16. The device (1) according to one of Claims 1 to 15, **characterized in that** a limiting mechanism is provided in order to limit a deflection of the mounting (6) from its zero position in a predefined fashion.

17. The device (1) according to one of Claims 1 to 16, **characterized in that** a mechanism for determining the position of the mounting (6) is provided.

18. The utilization of a device (1) according to Claims 1 to 17 for cleaning and immersion-painting car bodies (2).

## Revendications

1. Dispositif (1) pour le transport d'un objet à traiter, en particulier d'une carrosserie (2), le long d'un trajet de traitement, comprenant au moins un chariot de transport (3) qui est mobile dans un sens de transport (R) le long du trajet de traitement, un arbre rotatif (4) qui est aligné ou peut être aligné au moins environ verticalement au sens de transport (R) et au moins environ horizontalement et est disposé au niveau d'une extrémité en pouvant tourner sur l'au moins un axe de l'arbre rotatif (4) sur l'au moins un chariot de transport (3), ainsi qu'une fixation (6) reliée directement ou indirectement à l'arbre de rotation (4) pour l'objet à traiter, sachant que la fixation (6) est disposée pivotante sur un axe (X), sachant que l'axe (X) est aligné environ verticalement à l'arbre de rotation (4), **caractérisé en ce qu'**un arbre d'entraînement (10) placé au moins partiellement à l'intérieur de l'arbre de rotation (4) est prévu, sachant qu'une rotation de l'arbre d'entraînement (10) fait pivoter la fixation (6) sur l'axe (X) .

2. Dispositif (1) selon la revendication 1, **caractérisé en ce que** sont prévus au moins un moyen de traction, en particulier une courroie (30), qui est fixée respectivement directement ou indirectement à l'arbre d'entraînement (10) et à la fixation (6), ainsi qu'en option au moins un élément de ressort (29) entre l'arbre de rotation (4) et la fixation (6), sachant que la rotation de l'arbre d'entraînement (10) fait s'enrouler, respectivement se dérouler, l'au moins un moyen de traction, ce par quoi la fixation (6) peut le cas échéant basculer depuis une position zéro contre une force de traction.

3. Dispositif (1) selon la revendication 1, **caractérisé en ce qu'**un arbre pivotant (5) pour l'appui en pivotement de la fixation (6) est prévu, lequel porte la fixation (6) et lequel est placé pivotant sur l'axe (X) sur l'arbre de rotation (4).

4. Dispositif (1) selon la revendication 3, **caractérisé en ce qu'**un engrenage (9) est prévu dans une zone d'appui de l'arbre pivotant (5) sur l'arbre de rotation (4), de sorte qu'une rotation de l'arbre d'entraînement (10) peut être transmise sur l'arbre pivotant (5).

5. Dispositif (1) selon la revendication 4, **caractérisé en ce que** l'engrenage (9) est conçu en tant qu'engrenage à roues coniques entre l'arbre d'entraînement (10) et l'arbre pivotant (5).

6. Dispositif (1) selon la revendication 4, **caractérisé en ce que** l'engrenage (9) comprend un engrenage hélicoïdal.

7. Dispositif (1) selon la revendication 6, **caractérisé en ce que** l'engrenage hélicoïdal comprend une tige filetée (32) et un écrou de tige (33), sachant que l'écrou de tige (33) est disposé sur la tige filetée (32) et entoure celle-ci, de sorte que lors de la rotation de la tige filetée (32), l'écrou de tige (33) se déplace le long d'un axe de la tige filetée (32).

8. Dispositif (1) selon la revendication 7, **caractérisé en ce que** des roues dentées (34, 35) sont prévues en tant que partie de l'engrenage (9), lesquelles transmettent une rotation de l'arbre d'entraînement (10) à la tige filetée (32).

9. Dispositif (1) selon la revendication 7 ou 8, **caractérisé en ce qu'**un élément (36) est prévu en tant que partie de l'engrenage (9), lequel est relié à l'arbre pivotant (5) en étant immobile en rotation et translate une translation de la tige filetée (33) en une rotation de l'arbre pivotant (5).

10. Dispositif (1) selon la revendication 1, **caractérisé en ce qu'**une tige (37) est disposée sur l'arbre d'entraînement (10), laquelle se met en prise dans un support de palier (38) sur lequel la fixation (6) est disposée pivotante.

11. Dispositif (1) selon la revendication 10, **caractérisé en ce que** la fixation (6) est maintenue avec un élément de liaison (39) qui est conçu avec des ouvertures (39) à l'extrémité dans lesquelles des saillies (40) du support de palier (38) se mettent en prise.

12. Dispositif (1) selon l'une des revendications 1 à 11, **caractérisé en ce qu'**un système de verrouillage pour l'arbre d'entraînement (10) est prévu, lequel comprend un boulon (24) dirigé dans l'arbre de rotation (4) et comprend au moins un dispositif de réglage (25) pour le boulon (24), fixé sur l'au moins un chariot de transport (3), sachant que l'au moins un dispositif de réglage (25) entoure le boulon (24) dans une position prédéfinie de l'arbre de rotation (4), le boulon (24) peut être ainsi amené dans différentes positions et le boulon (24), dans l'une de ces positions, verrouille l'arbre d'entraînement (10) contre une rotation par rapport à l'arbre de rotation (4).

13. Dispositif (1) selon l'une des revendications 1 à 12, **caractérisé en ce qu'**un élément de support (7) est prévu au niveau d'une extrémité libre de l'arbre de rotation (4), lequel supporte l'arbre de rotation (4).

14. Dispositif (1) selon la revendication 13, **caractérisé en ce que** l'élément de support (7) est un rouleau entraîné ou sans entraînement qui est disposé en rotation sur l'arbre de rotation (4).

15. Dispositif (1) selon l'une des revendications 1 à 14, **caractérisé en ce qu'**un mécanisme de rappel est prévu pour le rappel automatique de la fixation (6) à une position zéro.

16. Dispositif (1) selon l'une des revendications 1 à 15, **caractérisé en ce qu'**un mécanisme de limitation est prévu pour la limitation prédéfinie d'un écart de la fixation (6) de sa position zéro.

17. Dispositif (1) selon l'une des revendications 1 à 16, **caractérisé en ce qu'**un mécanisme est prévu pour déterminer une position de la fixation (6).

18. Emploi d'un dispositif (1) selon les revendications 1 à 17 pour nettoyer et peindre des carrosseries (2) par immersion.
